# EUROPEAN PATENT APPLICATION

(11) **EP 4 654 656 A1**
(43) Date of publication of application: **26.11.2025**
(21) Application number: 24756013.9
(22) Date of filing: 01.02.2024
(51) Int. Cl.: H04W 24/10

(54) **MEASUREMENT DATA MANAGEMENT METHOD AND SYSTEM, AND RELATED DEVICE**

(30) Priority: 17.02.2023 CN 202310176074
(71) Applicant: Huawei Technologies Co., Ltd., Shenzhen, Guangdong 518129 (CN)
(72) Inventor: SHI, Xiaoli, Shenzhen, Guangdong 518129 (CN); ZOU, Lan, Shenzhen, Guangdong 518129 (CN)
(74) Representative: Pfenning, Meinig & Partner mbB
(86) International application number: PCT/CN2024/075255
(87) International publication number: WO 2024/169639

(57) **Abstract**

Embodiments of this application disclose a measurement data management method and system, and a related device. The method includes: determining a quality of experience QoE measurement policy; and sending the QoE measurement policy to a second network management node, where the QoE measurement policy is used by a base station under the second network management node to perform a QoE measurement task. In embodiments of this application, a first network management node may send the QoE measurement policy to the base station through the second network management node, and the base station sends the QoE measurement policy to UE, to indicate the UE to manage a QoE measurement report based on the QoE measurement policy. This can ensure integrity of the QoE measurement report reported by the UE.

## Description

This application claims priority to Chinese Patent Application No. 202310176074.X, filed with the China National Intellectual Property Administration on February 17, 2023 and entitled "MEASUREMENT DATA MANAGEMENT METHOD AND SYSTEM, AND RELATED DEVICE", which is incorporated herein by reference in its entirety.

### TECHNICAL FIELD

This application relates to the field of communication network technologies, and in particular, to a measurement data management method and system, and a related device.

### BACKGROUND

In management-based activation, quality of experience (Quality of Experience, QoE) measurement values of an application (application) layer of a specific service type may be collected from user equipment (User Equipment, UE) in a specified area. In QoE measurement collection (QoE management measurement collection, QMC) task of QoE measurement collection, a network management system indicates the UE via a base station to perform measurement, and the UE stores measurement data in a buffer at an access stratum. Because there are various types of services involved in QMC, and potentially it may take a long time for measurement of these services, a contradiction arises that an amount of measurement data to be stored exceeds a capacity of the buffer. Due to the storage limitation, the UE may discard partial QoE measurement. Therefore, how to ensure integrity of a QoE measurement result is an urgent problem to be resolved in the QMC task.

### SUMMARY

Embodiments of this application provide a measurement data management method and system, and a related device, to ensure integrity of a QoE measurement report of UE.

According to a first aspect, an embodiment of this application provides a measurement data management method, applied to a first network management node, and the method includes:
determining a quality of experience QoE measurement policy; and
sending the QoE measurement policy to a second network management node, where
the QoE measurement policy is used by a base station under the second network management node to perform a QoE measurement task.

The first network management node is a management service consumer, and the second network management node is a management service producer.

It can be learned that, in this embodiment of this application, the first network management node may send the QoE measurement policy to the base station through the second network management node, and the base station sends the QoE measurement policy to the UE, to indicate the UE to discard and/or store the QoE measurement report based on the QoE measurement policy. This can ensure the integrity of the QoE measurement report reported by the UE.

In a possible implementation, the QoE measurement policy may include one or more of the following:
The QoE measurement policy indicates the UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In this implementation, when the buffer at the access stratum is full, the QoE measurement policy may indicate, to the UE, QoE measurement reports that need to be stored or QoE measurement reports that need to be discarded, and/or indicate the UE to report the QoE measurement report, and/or indicate the UE to store the newly added QoE measurement report at the UE application, and/or indicate the UE to store QoE measurement reports of specific QoE measurement types in the buffer at the access stratum (or further indicate a percentage of a QoE measurement report of each type), and/or indicate the UE to store the QoE measurement report based on integrity of the QoE measurement report, and/or the like. In this way, the integrity of the QoE measurement report of the UE can be ensured based on a specific discarding/storage policy.

In a possible implementation, the method further includes:
receiving a QoE measurement report of the UE and a status of the QoE measurement report.

In this implementation, when the third network management node is located in the first network management node, the first network management node may receive the QoE measurement report and a status of the QoE measurement report that are sent by the second network management node, so that the first network management node can perform related analysis or optimization based on the QoE measurement report and the status of the QoE measurement report; or the first network management node may further send the QoE measurement report and the status of the QoE measurement report to the third network management node, and the third network management node performs related analysis or optimization based on the QoE measurement report and the status of the QoE measurement report, to optimize a network parameter and improve service experience of users. The third network management node is a measurement collection entity. When the third network management node exists independently, the first network management node may receive the QoE measurement report and the status of the QoE measurement report that are sent by the third network management node, so that related analysis or optimization may be performed based on the QoE measurement report and the status of the QoE measurement report.

In a possible implementation, the status of the QoE measurement report includes an integrity state and a discarding state.

In this implementation, the integrity state may indicate whether a QoE measurement report of a session session is complete or incomplete; and the discarding state may be a quantity of times of discarding QoE measurement data of a session, duration of discarding the data, or the like. The integrity state and the discarding state may indicate the integrity of the QoE measurement report, so that availability of the QoE measurement report for a network management system can be ensured. For example, if a QoE measurement report of a service has low integrity, availability of the service for the network management system is low accordingly.

According to a second aspect, an embodiment of this application provides a measurement data management method, applied to a base station, and the method includes:
receiving a QoE measurement policy from a first network management node;
sending the QoE measurement policy to UE, where the QoE measurement policy is used for QoE measurement by the UE;
receiving a QoE measurement report sent by the UE; and
sending the QoE measurement report to a third network management node.

It can be learned that in this embodiment of this application, the base station may receive the QoE measurement policy sent by the first network management node, and send the QoE measurement policy to the UE, so that the UE discards and/or stores the QoE measurement report based on the QoE measurement policy, and reports the obtained QoE measurement report to the base station. In this case, the base station may send the QoE measurement report to the third network management node, and the third network management node can perform related analysis or optimization based on the QoE measurement report.

In a possible implementation, the QoE measurement policy may include one or more of the following:
The QoE measurement policy indicates the user equipment UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of the QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In this implementation, when the buffer at the access stratum is full, the QoE measurement policy may indicate, to the UE, QoE measurement reports that need to be stored or QoE measurement reports that need to be discarded, and/or indicate the UE to report the QoE measurement report, and/or indicate the UE to store the newly added QoE measurement report at the UE application, and/or indicate the UE to store QoE measurement reports of specific QoE measurement types in the buffer at the access stratum (or further indicate a percentage of a QoE measurement report of each type), and/or indicate the UE to store the QoE measurement report based on integrity of the QoE measurement report, and/or the like. In this way, the integrity of the QoE measurement report of the UE can be ensured based on a specific discarding/storage policy.

In a possible implementation, after receiving the QoE measurement report sent by the UE, the method further includes:
analyzing the QoE measurement report, to obtain a status of the QoE measurement report; and
the method further includes:
   sending the status of the QoE measurement report to the third network management node.

In this implementation, the base station may perform an analysis operation on the status of the QoE measurement report, so that the QoE measurement report and the status of the QoE measurement report can be sent to the third network management node.

In a possible implementation, the status of the QoE measurement report includes an integrity state and a discarding state.

In this implementation, the integrity state and the discarding state may indicate the integrity of the QoE measurement report, so that availability of the QoE measurement report for a network management system can be ensured.

In a possible implementation, sending the QoE measurement report to the third network management node includes:
sending the QoE measurement report to the third network management node through a second network management node.

In this implementation, the base station may directly send the QoE measurement report and the status of the QoE measurement report to the third network management node, or the base station may send the QoE measurement report and the status of the QoE measurement report to the third network management node through the second network management node, or the base station may further send the QoE measurement report to the second network management node, and the second network management node performs an analysis operation on the status of the QoE measurement report, and sends the QoE measurement report and the status of the QoE measurement report to the third network management node, to ensure integrity of the QoE measurement report and availability of the QoE measurement report for the third network management node.

In a possible implementation, sending the QoE measurement report to the third network management node through the second network management node includes:
sending the QoE measurement report to the first network management node through the second network management node, for the first network management node to send the QoE measurement report to the third network management node.

In this implementation, when the third network management node is located in the first network management node, the base station may send the QoE measurement report to the first network management node through the second network management node, to ensure the integrity of the QoE measurement report and availability of the QoE measurement report for the third network management node.

In a possible implementation, sending the QoE measurement policy to the UE includes:
sending a radio resource control RRC reconfiguration message to the UE, and sending the QoE measurement policy to the UE via the RRC reconfiguration message.

In this implementation, the base station may send the QoE measurement policy to the UE via an RRC reconfiguration message, for the UE to perform the QoE measurement based on the QoE measurement policy, to obtain the QoE measurement report with good integrity.

According to a third aspect, an embodiment of this application provides a measurement data management method, applied to UE, and the method includes:
receiving a QoE measurement policy sent by a base station;
performing QoE measurement based on the QoE measurement policy, to obtain a QoE measurement report; and
sending the QoE measurement report to the base station.

It can be learned that, in this embodiment of this application, the UE may discard and/or store the QoE measurement report based on the QoE measurement policy sent by the base station. This can ensure the integrity of the reported QoE measurement report.

In a possible implementation, the QoE measurement policy may include one or more of the following:
The QoE measurement policy indicates the UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of the QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In this implementation, when the buffer at the access stratum is full, the QoE measurement policy may indicate, to the UE, QoE measurement data that needs to be stored or QoE measurement data that needs to be discarded, and/or indicate the UE to report the QoE measurement report, and/or indicate the UE to store the newly added QoE measurement report at the UE application layer, and/or indicate the UE to store QoE measurement data of specific QoE measurement types in the buffer at the access stratum (or further indicate a percentage of QoE measurement data of each type), and/or indicate the UE to store the QoE measurement report based on integrity of the QoE measurement report, and/or the like. In this way, the integrity of the QoE measurement report of the UE can be ensured based on a specific discarding/storage policy.

In a possible implementation, performing the QoE measurement based on the QoE measurement policy, to obtain the QoE measurement report includes:
performing the QoE measurement based on the QoE measurement policy, and storing the QoE measurement report in the buffer; and
the method further includes:
   when the buffer is full, sending an active response message to the application layer through the access stratum, where the active response message includes information indicating the application layer to store the newly added QoE measurement report.

In this implementation, when the QoE measurement policy indicates the UE to store the newly added QoE measurement report at the UE application layer when the buffer is full, the UE access stratum may indicate, via an active response message when the buffer is full, the UE application layer to continue to store the newly added QoE measurement report, to avoid the newly added QoE measurement report being discarded, so as to ensure the integrity of the QoE measurement report.

According to a fourth aspect, an embodiment of this application provides a measurement data management method, and the method includes:

A first network management node determines a quality of experience QoE measurement policy, and sends the QoE measurement policy to a second network management node;
the second network management node receives the QoE measurement policy, and sends the QoE measurement policy to a base station;
the base station performs a QoE measurement task based on the QoE measurement policy, to obtain a QoE measurement report; and
the base station sends the QoE measurement report to a third network management node.

It can be learned that, in this embodiment of this application, the first network management node may send the QoE measurement policy to the base station through the second network management node, and the base station sends the QoE measurement policy to UE, to indicate the UE to discard and/or store a QoE measurement report based on the QoE measurement policy. This can ensure integrity of the QoE measurement report reported by the UE.

In a possible implementation, the QoE measurement policy may include one or more of the following:
The QoE measurement policy indicates UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In this implementation, when the buffer at the access stratum is full, the QoE measurement policy may indicate, to the UE, QoE measurement data that needs to be stored or QoE measurement data that needs to be discarded, and/or indicate the UE to report the QoE measurement report, and/or indicate the UE to store the newly added QoE measurement report at the UE application layer, and/or indicate the UE to store QoE measurement data of specific QoE measurement types in the buffer at the access stratum (or further indicate a percentage of QoE measurement data of each type), and/or indicate the UE to store the QoE measurement report based on integrity of the QoE measurement report, and/or the like. In this way, the integrity of the QoE measurement report of the UE can be ensured based on a specific discarding/storage policy.

In a possible implementation, that the base station performs the QoE measurement task based on the QoE measurement policy, to obtain the QoE measurement report includes:
sending the QoE measurement policy to the UE, where the QoE measurement policy is used by the UE to perform the QoE measurement; and
receiving the QoE measurement report sent by the UE.

In this implementation, the base station may deliver, to the UE, the QoE measurement policy sent by the first network management node, so that the UE discards, stores, and/or reports the QoE measurement report based on the QoE measurement policy.

In a possible implementation, after the base station receives the QoE measurement report sent by the UE, the method further includes:
The base station analyzes the QoE measurement report, to obtain a status of the QoE measurement report; and
the base station sends the status of the QoE measurement report to the third network management node.

In this implementation, the base station may perform an analysis operation on the status of the QoE measurement report, so that the QoE measurement report and the status of the QoE measurement report can be sent to the third network management node.

In a possible implementation, the status of the QoE measurement report includes an integrity state and a discarding state.

In this implementation, the integrity state and the discarding state may indicate the integrity of the QoE measurement report, so that availability of the QoE measurement report for a network management system can be ensured.

In a possible implementation, that the base station sends the QoE measurement report to the third network management node includes:
The base station sends the QoE measurement report to the third network management node through the second network management node.

In this implementation, the base station may directly send the QoE measurement report and the status of the QoE measurement report to the third network management node, or the base station may send the QoE measurement report and the status of the QoE measurement report to the third network management node through the second network management node, or the base station may further send the QoE measurement report to the second network management node, and the second network management node performs an analysis operation on the status of the QoE measurement report, and sends the QoE measurement report and the status of the QoE measurement report to the third network management node, to ensure integrity of the QoE measurement report and availability of the QoE measurement report for the third network management node.

In a possible implementation, that the base station sends the QoE measurement report to the third network management node through the second network management node includes:
The base station sends the QoE measurement report to the first network management node through the second network management node, for the first network management node to send the QoE measurement report to the third network management node.

In this implementation, when the third network management node is located in the first network management node, the base station may send the QoE measurement report to the first network management node through the second network management node, to ensure the integrity of the QoE measurement report and availability of the QoE measurement report for the third network management node.

In a possible implementation, that the base station sends the QoE measurement policy to the user equipment UE includes:
The base station sends a radio resource control RRC reconfiguration message to the UE, and sends the QoE measurement policy to the UE via the RRC reconfiguration message.

In this implementation, the base station may send the QoE measurement policy to the UE via an RRC reconfiguration message, for the UE to perform the QoE measurement based on the QoE measurement policy, to obtain the QoE measurement report with good integrity.

In a possible implementation, that the UE performs the QoE measurement based on the QoE measurement policy, to obtain the QoE measurement report includes:
The UE performs the QoE measurement based on the QoE measurement policy, and stores the QoE measurement report in the buffer; and
the method further includes:
   When the buffer is full, the UE sends an active response message to the application layer through the access stratum, where the active response message includes information indicating the application layer to store the newly added QoE measurement report.

In this implementation, when the QoE measurement policy indicates the UE to store the newly added QoE measurement report at the UE application layer when the buffer is full, the UE access stratum may indicate, via an active response message when the buffer is full, the UE application layer to continue to store the newly added QoE measurement report, to avoid the newly added QoE measurement report being discarded, so as to ensure the integrity of the QoE measurement report.

In a possible implementation, the method further includes:
The first network management node receives a QoE measurement report of the UE and a status of the QoE measurement report.

In this implementation, when the third network management node is located in the first network management node, the first network management node may receive the QoE measurement report and a status of the QoE measurement report that are sent by the second network management node, so that the first network management node can perform related analysis or optimization based on the QoE measurement report and the status of the QoE measurement report; or the first network management node may further send the QoE measurement report and the status of the QoE measurement report to the third network management node, and the third network management node performs related analysis or optimization based on the QoE measurement report and the status of the QoE measurement report, to optimize a network parameter and improve service experience of users. The third network management node is a measurement collection entity. When the third network management node exists independently, the first network management node may receive the QoE measurement report and the status of the QoE measurement report that are sent by the third network management node, so that related analysis or optimization may be performed based on the QoE measurement report and the status of the QoE measurement report.

In a possible implementation, the first network management node is a management service consumer, and the second network management node is a management service producer.

In a possible implementation, the method further includes:
The second network management node receives the QoE measurement report sent by the base station;
the second network management node analyzes the QoE measurement report, to obtain a status of the QoE measurement report; and
the second network management node sends the QoE measurement report and the status of the QoE measurement report to the third network management node.

In this implementation, when the base station sends the QoE measurement report to the third network management node through the second network management node, the second network management node may perform an analysis operation on the status of the QoE measurement report, and send the QoE measurement report and the status of the QoE measurement report to the third network management node, to ensure integrity of the QoE measurement report and availability of the QoE measurement report for the third network management node.

According to a fifth aspect, an embodiment of this application provides a measurement data management system, including a first network management node, a second network management node, and a base station. The first network management node is configured to perform the method according to any implementation of the first aspect, and the base station is configured to perform the method according to any implementation of the second aspect.

In a possible implementation, the system further includes user equipment UE, and the UE is configured to perform the method according to any implementation of the third aspect.

It may be understood that, because the method embodiment and the system embodiment are different presentation forms with a same technical concept, content in the fourth aspect of embodiments of this application should be synchronously adapted to the fifth aspect of embodiments of this application, and same or similar beneficial effects can be achieved. Details are not described herein again.

According to a sixth aspect, an embodiment of this application provides a measurement data management apparatus, used for a first network management node. The apparatus includes a first processing unit and a first transceiver unit.

The first processing unit is configured to determine a quality of experience QoE measurement policy; and
the first transceiver unit is configured to send the QoE measurement policy to a second network management node, where
the QoE measurement policy is used by a base station under the second network management node to perform a QoE measurement task.

According to a seventh aspect, an embodiment of this application provides a measurement data management apparatus, used for a base station. The apparatus includes a second transceiver unit. The second transceiver unit is configured to: receive a quality of experience QoE measurement policy from a first network management node; send the QoE measurement policy to user equipment UE, where the QoE measurement policy is used for the UE to perform QoE measurement; receive a QoE measurement report sent by the UE; and send the QoE measurement report to a third network management node.

According to an eighth aspect, an embodiment of this application provides a measurement data management apparatus, used for UE. The apparatus includes a third transceiver unit and a third processing unit.

The third transceiver unit is configured to receive a quality of experience QoE measurement policy sent by a base station;
the third processing unit is configured to perform QoE measurement based on the QoE measurement policy, to obtain a QoE measurement report; and
the third transceiver unit is further configured to send the QoE measurement report to the base station.

It may be understood that, because the method embodiment and the apparatus embodiment are different presentation forms with a same technical concept, content in the first aspect of embodiments of this application should be synchronously adapted to the sixth aspect of embodiments of this application, content in the second aspect of embodiments of this application should be synchronously adapted to the seventh aspect of embodiments of this application, content in the third aspect of embodiments of this application should be synchronously adapted to the eighth aspect of embodiments of this application, and same or similar beneficial effects can be achieved. Details are not described herein again.

According to a ninth aspect, an embodiment of this application provides a first network management node, including a processor, a memory, a communication interface, and one or more programs. The one or more programs are stored in the memory and are configured to be executed by the processor. The program includes instructions used to perform the method according to the first aspect.

According to a tenth aspect, an embodiment of this application provides a base station, including a processor, a memory, a communication interface, and one or more programs. The one or more programs are stored in the memory and are configured to be executed by the processor. The program includes instructions used to perform the method according to the second aspect.

According to an eleventh aspect, an embodiment of this application provides UE, including a processor, a memory, a communication interface, and one or more programs. The one or more programs are stored in the memory and are configured to be executed by the processor. The program includes instructions used to perform the method according to the third aspect.

According to a twelfth aspect, an embodiment of this application provides a chip, including a processor, configured to call a computer program from a memory and run the computer program, to enable a device to which the chip is mounted to perform the method according to any one of the first aspect, the second aspect, the third aspect, or the fourth aspect.

According to a thirteenth aspect, an embodiment of this application provides a computer-readable storage medium. The computer-readable storage medium stores a computer program. When the computer program is run, the method according to any one of the first aspect, the second aspect, the third aspect, or the fourth aspect is implemented.

According to a fourteenth aspect, an embodiment of this application provides a computer program product. The computer program product includes computer program code. When the computer program code is run, the method according to any one of the first aspect, the second aspect, or the third aspect is implemented.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a management service producer and a management service consumer according to an embodiment of this application;
FIG. 2 is a diagram of a management function according to an embodiment of this application;
FIG. 3 is a diagram of deploying a management function as a separate entity according to an embodiment of this application;
FIG. 4 is a diagram of embedding a management function into a network function according to an embodiment of this application;
FIG. 5 is a diagram of a service-based management architecture according to an embodiment of this application;
FIG. 6 is a schematic flowchart of a measurement data management method according to an embodiment of this application;
FIG. 7A and FIG. 7B are a schematic flowchart of another measurement data management method according to an embodiment of this application;
FIG. 8A and FIG. 8B are a schematic flowchart of another measurement data management method according to an embodiment of this application;
FIG. 9A and FIG. 9B are a schematic flowchart of another measurement data management method according to an embodiment of this application;
FIG. 10A to FIG. 10C are a schematic flowchart of another measurement data management method according to an embodiment of this application;
FIG. 11 is a diagram of a measurement data management system according to an embodiment of this application;
FIG. 12 is a diagram of another measurement data management system according to an embodiment of this application;
FIG. 13 is a diagram of another measurement data management system according to an embodiment of this application;
FIG. 14 is a diagram of another measurement data management system according to an embodiment of this application;
FIG. 15 is a diagram of a structure of a measurement data management apparatus according to an embodiment of this application;
FIG. 16 is a diagram of a structure of another measurement data management apparatus according to an embodiment of this application;
FIG. 17 is a diagram of a structure of another measurement data management apparatus according to an embodiment of this application;
FIG. 18 is a diagram of a structure of a first network management node according to an embodiment of this application;
FIG. 19 is a diagram of a structure of a base station according to an embodiment of this application; and
FIG. 20 is a diagram of a structure of user equipment UE according to an embodiment of this application.

### DESCRIPTION OF EMBODIMENTS

In the specification, claims, and accompanying drawings of this application, the terms "first", "second", "third", "fourth" and so on are intended to distinguish between different objects but do not indicate a particular order. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this specification may be combined with other embodiments.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a terminal device and an application that runs on the terminal device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network like the internet interacting with other systems by using the signal).

The following briefly describes related technical background of this application, for better understanding of this application.

It should be understood that parameters of a network request session are typically included in a QoE measurement collection task request in a create QMC (create MOI) operation, and are sent from a management service consumer (Management service consumer, MnS consumer) to a base station gNB through a management system. The MnS consumer activates a QMC task by creating a QMC task object instance in a management service producer (Management service producer, MnS producer). Then, the QMC task is sent to the gNB. After receiving the QMC task, the gNB indicates, via a radio resource control (Radio Resource Control, RRC) reconfiguration message, UE to perform measurement and report a measurement report to the MnS consumer.

The following information is included in the QoE measurement collection task of the QMC (in the create MOI QMCTask):
a service type serviceType, which is a QoE measurement type used by the UE;
an area scope areaScope, which specifies an area in which data is to be collected, for example, a base station list, a cell list, or a tracking area list;
a QoE collection entity address qoECollectionEntityAddress, which specifies an address to which a QMC record is to be transmitted, where the address may be an IPv4 or IPv6 address;
QoE reference qoEReference, which is a unique identifier of the QoE measurement task in a QMC process;
minimization of drive tests (Minimization of Drive Tests, MDT) alignment information mDTAlignmentInformation, which indicates MDT measurement to be aligned with the QoE measurement, where this parameter is optional and valid only for new radio (New radio, NR);
available radio access network (Radio Access Network, RAN) QoE metrics availableRANqoEMetrics, which indicates an available RAN visible QoE indicator to the gNB, where this parameter is optional and is valid only for the NR; and
a QMC configuration file qMCConfigFile, which provides a reference to a file that contains an application layer measurement configuration parameter of the UE.

For QoE measurement storage, the following several optional solutions are discussed in related aspects:
Solution 1: The QoE measurement is buffered at a UE access stratum (Access stratum, AS), and is discarded after a buffer at the AS is full.
Solution 2: The QoE measurement is buffered at the UE AS, and is reported by establishing an RRC connection after the buffer at the AS is full.
Solution 3: The QoE measurement is buffered at the UE AS, and is stored at a UE application layer after the buffer at the AS is full.
Solution 4: The QoE measurement is buffered at the UE application layer.

Based on the foregoing several solutions, because a size of the buffer at the UE AS is limited, the UE may discard partial QoE measurement due to the limitation of the storage size. Consequently, integrity of a QoE measurement result cannot be ensured. A UE side does not know a preference of an operations, administration, and maintenance (Operations, administration, and maintenance, OAM) side for the QoE measurement, for example, QoE measurement reports that need to be reported and QoE measurement reports that need to be discarded. How to manage the QoE measurement report in the buffer at the AS on the OAM side to ensure integrity of the QoE measurement report is a problem to be resolved currently.

The following briefly describes an architecture to which this application can be applied.

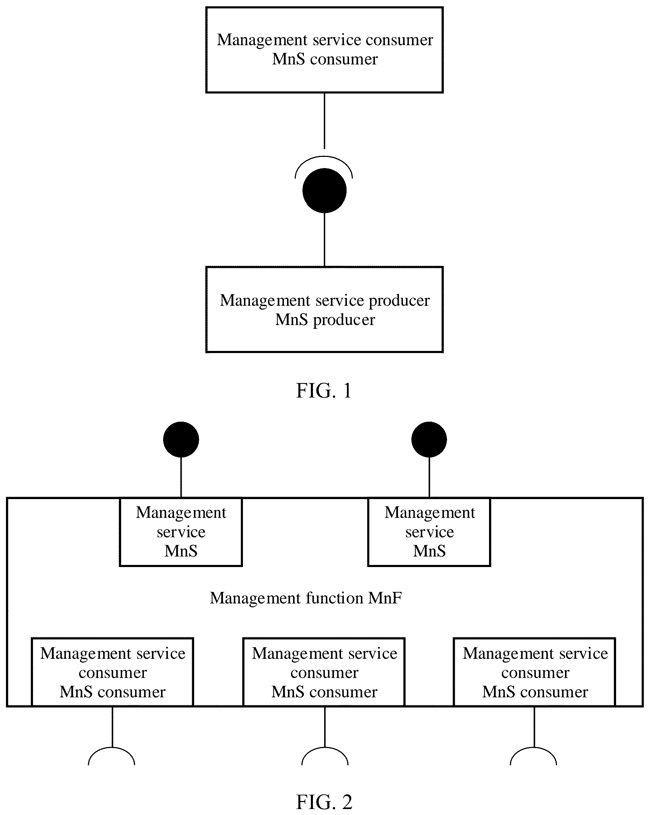

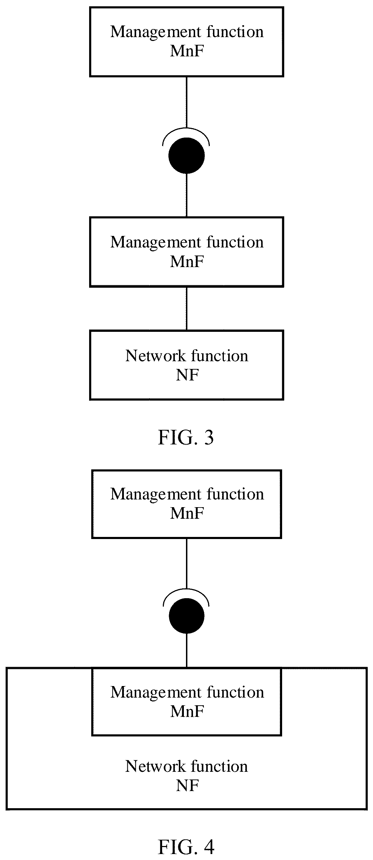

Embodiments of this application are applicable to an architecture of a management service (Management service, MnS) and a management function (Management function, MnF). A basic building block of a service-based management architecture (Service Based Management Architecture, SBMA) is the MnS, which is a group of functions used to manage and coordinate networks and services. An entity that generates the MnS is called a MnS producer, and an entity that consumes the MnS is called a MnS consumer. As shown in FIG. 1, the MnS provided by the MnS producer can be consumed by any entity with appropriate authorization and identification authentication, and the MnS producer provides own services to the MnS consumer through a standardized service interface including separately specified MnS components. The MnF is a management entity defined in 3GPP (3rd Generation Partnership Project, 3rd Generation Partnership Project), and externally visible behavior and interfaces of the MnF are defined as the MnS. The MnF is a logical entity serving as a MnS consumer and/or a MnS producer. In the SBMA architecture, the MnF serves as the MnS producer or the MnS consumer. The MnS produced by the MnF may have a plurality of consumers, and the MnF may also use a plurality of management services from one or more MnS producers. As shown in FIG. 2, the MnF may serve as both a MnS consumer and a MnS producer. The MnF may be deployed as a separate entity, or may be embedded into a network function (Network function, NF), to provide MnS (s). For example, FIG. 3 shows an example in which the MnF is deployed as a separate entity to provide MnS (s). For example, FIG. 4 shows an example in which the MnF is embedded into the NF to provide the MnS (s).

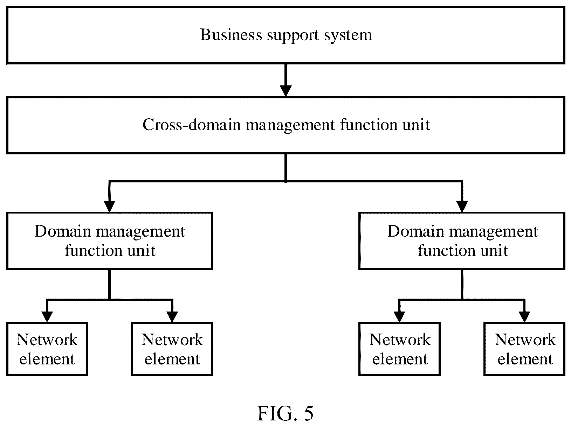

FIG. 5 is a diagram of a service-based management architecture according to an embodiment of this application. As shown in FIG. 5, the service-based management architecture includes a business support system (business support system, BSS), a cross-domain management function (cross-domain management function, CD-MnF) unit, a domain management function (domain management function, Domain-MnF) unit, and a network element (element). It should be understood that the cross-domain management function unit may be a node like a network management system (Network Management System, NMS), a MnS Producer, or a MnS Consumer, and the domain management function unit may be a node like an element management system (Element Management System, EMS), an MBB automation engine (MBB Automation Engine, MAE), a MnS Producer, or a MnS Consumer. The BSS is oriented to a communication service (communication service), and is used to provide functions and management services such as charging, settlement, accounting, a customer service, business, network monitoring, life cycle management of a communication service, and translation of a service intent. The BSS may be an operator operation system or a vertical industry operation system (vertical OT system).

The CD-MnF is also referred to as a network management function (network management function, NMF) unit, for example, may be a network management entity like the NMS or a network function management service consumer (network function management service consumer, NFMS_C). The CD-MnF provides one or more of the following management functions or management services: life cycle management of a network, deployment of a network, fault management of a network, performance management of a network, configuration management of a network, assurance of a network, an optimization function of a network, translation of a network intent from a communication service provider (intent from communication service provider, Intent-CSP), and the like.

The network indicated by the management function or the management service may include one or more network elements or sub-networks, or may be a network slice. In other words, the NMF may be a network slice management function (network slice management function, NSMF) unit, a cross-domain management data analytical function (management data analytical function, MDAF) unit, a cross-domain self-organization network function (self-organization network function, SON Function) unit, or a cross-domain intent management function (intent driven management service, Intent Driven MnS) unit.

In some deployment scenarios, the CD-MnF may further provide life cycle management of a sub-network, deployment of a sub-network, fault management of a sub-network, performance management of a sub-network, configuration management of a sub-network, assurance of a sub-network, an optimization function of a sub-network, translation of a network intent from a communication service provider (intent-CSP) of a sub-network, translation of a network intent from a communication service consumer of a sub-network (intent from communication service consumer, intent-CSC), or the like. The sub-network herein includes a plurality of small sub-networks, and may be a network slice sub-network.

The Domain-MnF is also referred to as a sub-network management function (network management function, NMF) unit or a network element management function unit. For example, the Domain-MnF may be a network element management entity like an MAE, an EMS, or a network function management service provider (network function management service provider, NFMS_P).

The Domain-MnF provides one or more of the following functions or management services: life cycle management of a sub-network or a network element, deployment of a sub-network or a network element, fault management of a sub-network or a network element, performance management of a sub-network or a network element, assurance of a sub-network or a network element, an optimization function of a sub-network or a network element, translation of an intent from a sub-network or a network element (intent from network operator, Intent-NOP), and the like. The sub-network herein includes one or more network elements. The sub-network may further include a sub-network, in other words, one or more sub-networks form a larger sub-network.

Optionally, the sub-network herein may alternatively be a network slice sub-network. A domain management system may be a network slice subnet management function (network slice subnet management function, NSSMF) unit, a domain management data analytical function (management data analytical function, Domain MDAF) unit, a domain self-organization network function (self-organization network function, SON Function) unit, a domain intent management function unit Intent Driven MnS, or the like.

The domain management function unit may be classified in the following manners, including:
By network type, the domain management function unit may be classified as follows: an access network domain management function (radio access network domain management function, RAN-Domain-MnF) unit, a core network domain management function (core network domain management function, CN-Domain-MnF) unit, a transport network domain management function (transport network domain management function, TN-Domain-MnF) unit, and the like. It should be noted that the domain management function unit may alternatively be a domain network management system, and may manage one or more of an access network, a core network, or a transport network.

The element is an entity that provides a network service, and includes a core network element, an access network element, and the like. The core network element includes an access and mobility management function (access and mobility management function, AMF), a session management function (session management function, SMF), a policy control function (policy control function, PCF), a network data analytical unit (network data analytical function, NWDAF), a network repository unit (NF Repository Function, NRF), a gateway, and the like. The access network element includes a base station (for example, a gNB or an eNB), a central unit control plane (central unit control plane, CUCP), a central unit (central unit, CU), a distribution unit (distribution unit, DU), a central unit user plane (central unit user plane, CUUP), and the like.

The element may provide one or more of the following management functions or management services: life cycle management of a network element, deployment of a network element, fault management of a network element, performance management of a network element, assurance of a network element, an optimization function of a network element, translation of an intent from a network element, and the like.

It should be understood that, if the MnS is a management service provided by the cross-domain management function unit, the CD-MnF is a MnS producer, and the BSS is a MnS consumer. If the MnS is a management service provided by the Domain-MnF, the Domain-MnF is a MnS producer, and the CD-MnF is a MnS consumer. If the MnS is a management service provided by the element, the element is a MnS producer, and the domain management function unit is a MnS consumer.

The following describes the technical solutions provided in this application in detail with reference to specific implementations.

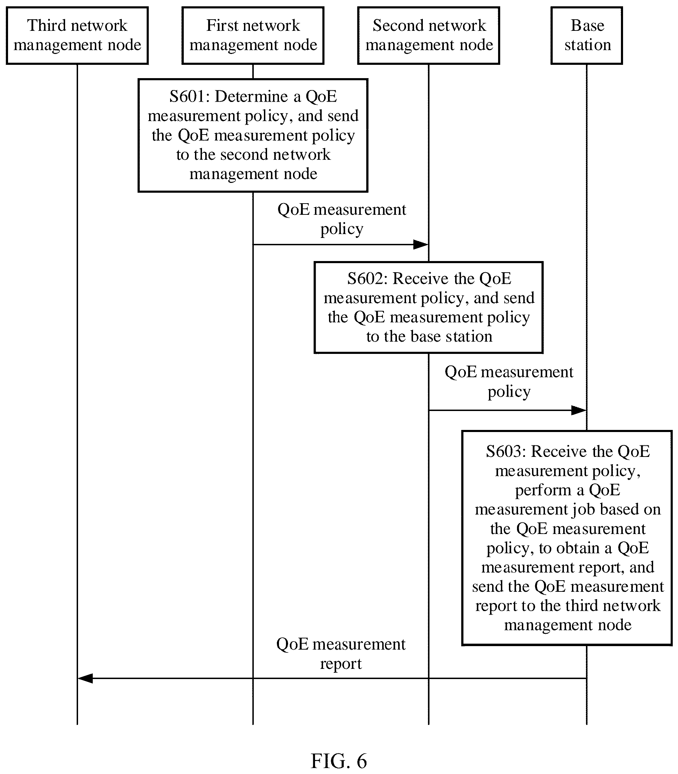

FIG. 6 is a schematic flowchart of a measurement data management method according to an embodiment of this application. The method may be implemented based on the system shown in FIG. 5. As shown in FIG. 6, the method may include the following steps.

S601: A first network management node determines a QoE measurement policy, and sends the QoE measurement policy to a second network management node.

S602: The second network management node receives the QoE measurement policy, and sends the QoE measurement policy to a base station.

For example, the first network management node sends the QoE measurement policy to the second network management node serving an affected base station, and then the second network management node sends the QoE measurement policy to the base station.

S603: The base station receives the QoE measurement policy, performs a QoE measurement task based on the QoE measurement policy, to obtain a QoE measurement report, and sends the QoE measurement report to a third network management node.

For example, the base station may send the QoE measurement report to the third network management node through the first network management node, or send the QoE measurement report to the third network management node through the second network management node.

For example, the base station may further analyze the QoE measurement report, to obtain a status of the QoE measurement report, and send the status of the QoE measurement report to the third network management node.

In this embodiment of this application, the QoE measurement policy may be included in a QMC task of a create QMC (create MOI) operation. When the first network management node sends a create MOI request of the QMC task (QMCTask) to the second network management node, the QoE measurement collection task starts. Parameters of the task may include at least one of the following: serviceType, areaScope, qoECollectionEntityAddress, qoEReference, mDTAlignmentInformation, availableRANqoEMetrics, and qMCConfigFile. For example, the first network management node may alternatively directly send the QoE measurement policy to the base station.

The service Type may include one or more of the following: dynamic adaptive streaming over a hyper text transfer protocol (Hyper Text Transfer Protocol, HTTP) (Dynamic Adaptive Streaming over HTTP, DASH), multimedia telephony service for an IP multimedia subsystem (IP Multimedia Subsystem, IMS) (Multimedia Telephony Service for IMS, MTSI), virtual reality (Virtual Reality, VR), 5G media streaming (5G Media Streaming, 5GMS), multimedia telephony (Multimedia telephony, MMTEL), and multimedia broadcast/multicast service (Multimedia Broadcast/Multicast Service, MBMS), and may further include a type of a RAN-aware service.

The QoE measurement report includes a measurement report of the serviceType. The following describes specific QoE measurement data/indicators of each service Type.

QoE indicators of a base station-aware service:
application layer buffer level applicationlayerBufferLevel; and
initial playout delay initialPlayoutDelay.

QoE indicators of the MMTEL:
corruption duration metric (Corruption duration metric), successive loss of reliable transport protocol (Reliable Transport Protocol, RTP) packets (Successive loss of RTP packets), frame rate (Frame rate), jitter duration (Jitter duration), sync loss duration (Sync loss duration), and round-trip time (Round-trip time), average codec bitrate (Average Codec bitrate), codec information (codec information), and call setup time (Call setup time).

QoE indicators of the DASH:
representation switch events (Representation Switch Events), average throughput (Average Throughput), initial playout delay (Initial Playout Delay), buffer level (Buffer Level), play list (Play List), MPD information (MPD Information), playout delay for media start-up (Playout Delay for Media Start-up), and device information (Device information).

QoE indicators of the MBMS:
corruption duration (Corruption duration), rebuffering duration (Rebuffering duration), initial buffering duration (initial buffering duration), successive loss of RTP packets (Successive loss of RTP packets), frame rate deviation jitter duration (Frame rate deviation Jitter duration), and content access/switch time (Content Access/Switch Time), and network resource (Network Resource).

QoE indicators of the 5GMS:
representation switch events (Representation Switch Events), average throughput (Average Throughput), initial playout delay (Initial Playout Delay), buffer level (Buffer Level), play list (Play List), MPD information (MPD Information), playout delay for media start-up (Playout Delay for Media Start-up), and device information (Device information).

QoE indicators of the VR:
representation switch events (Representation Switch Events), average throughput (Average Throughput), initial playout delay (Initial Playout Delay), buffer level (Buffer Level), play list (Play List), MPD information (MPD Information), playout delay for media start-up (Playout Delay for Media Start-up), and device information (Device information).

The QoE measurement policy may include one or more of the following policies.

Policy 1: The policy indicates UE to discard the QoE measurement report in a preset discarding manner when a buffer at an AS is full. The preset discarding manner is implemented by a user. For example, the user determines, based on an actual storage status and a running environment of the UE, to discard a new QoE measurement quantity or an old QoE measurement quantity, or discard a QoE measurement quantity in the buffer according to a first-in first-out principle. This is not limited in this application of the present invention.

Policy 2: The policy indicates, when a buffer at an AS is full, the UE to discard a newly added QoE measurement report or discard a QoE measurement report stored in the buffer. The policy 2 may be understood as discarding the new QoE measurement report and retaining the old QoE measurement report; or discarding the old QoE measurement report and storing the new QoE measurement report. The old QoE measurement report is data that is initially stored in the buffer in one session until the buffer is full. The new QoE measurement report is data that is initially stored in the buffer in one session after the buffer is full. For example, for a new session, the buffer at the UE AS starts to store QoE measurement data. After the buffer is full, data currently in the buffer is defined as an old QoE measurement report, and subsequently received QoE data is defined as a new QoE measurement report.

Policy 3: The policy indicates the UE to establish an RRC connection to the base station when the buffer is full, to report, to the base station over the RRC connection, the QoE measurement report stored in the buffer. In other words, the UE is triggered to establish the RRC connection to the base station.

Policy 4: The policy indicates the UE to store the newly added QoE measurement report at a UE application layer when the buffer is full. In other words, when the buffer at the UE AS is full, the newly added QoE measurement report may continue to be stored at the UE application layer.

Policy 5: The policy indicates the UE to store the QoE measurement report based on integrity of QoE measurement. For example, QoE measurement data with good integrity may be stored. This is not limited herein in this application. For example, if all QoE measurement of a session is complete or a completion rate is high, integrity of the session is good.

Policy 6: The policy indicates the UE to store, in the buffer, a QoE measurement report of a specified QoE measurement type, or store, in the buffer based on a percentage corresponding to a first QoE measurement type, a QoE measurement report of the first QoE measurement type. For example, the policy may indicate that QoE measurement data of the first QoE measurement type, a second QoE measurement type, and a third QoE measurement type may be stored in the buffer, and QoE measurement data of a fourth QoE measurement type and a fifth QoE measurement type may be discarded. Further, the policy may further specify a percentage of a QoE measurement type that can be stored in the buffer. For example, the QoE measurement data of the first QoE measurement type may be stored in the buffer by 50%, and the remaining 50% may be discarded; and the QoE measurement data of the second QoE measurement type may be stored in the buffer by 60%, and the remaining 40% may be discarded. For the QoE measurement data of the first QoE measurement type, which 50% of the data is specifically stored is not limited herein.

For example, the first management node may further send a QoE measurement preference to the base station through the second management node, and the base station performs the QoE measurement task based on the QoE measurement preference. Specifically, the QoE measurement preference may include one or more of the following: a priority of a cell for QoE measurement, a session priority of a session, a priority of a service type, or the like. For example, if the QoE measurement preference is a priority of a cell, the buffer of the UE preferentially stores QoE measurement data of a cell with a higher priority; if the QoE measurement preference is a priority of a session, the buffer of the UE preferentially stores QoE measurement data of a cell with a session having a higher priority; or if the QoE measurement preference is a priority of a service type, the buffer of the UE preferentially stores QoE measurement data of a cell with a service type having a higher priority. The service type herein is described above, and details are not described herein again.

For example, the first network management node may further send a time validity of the QoE measurement report to the base station through the second network management node, and the base station sends the time validity to the UE. For example, if measurement of a QoE measurement type on a UE side exceeds the time validity, the UE may not need to report a QoE measurement report of the QoE measurement type.

It should be noted that the QoE measurement report in this application may be QoE measurement data, a QoE measurement quantity, a sum of QoE measurement quantities, or a sum of QoE measurement data. The definition is not limited in this application.

In this implementation, when the buffer at the access stratum is full, the QoE measurement policy may indicate, to the UE, QoE measurement data that needs to be stored or QoE measurement data that needs to be discarded, and/or indicate the UE to report the QoE measurement report, and/or indicate the UE to store the newly added QoE measurement report at the UE application layer, and/or indicate the UE to store QoE measurement data of specific QoE measurement types in the buffer at the access stratum (or further indicate a percentage of QoE measurement data of each type), and/or indicate the UE to store the QoE measurement report based on integrity of the QoE measurement report, and/or the like. In this way, the integrity of the QoE measurement report of the UE can be ensured based on a specific discarding/storage policy.

It should be understood that the base station is a base station under the second network management node, for example, a gNB. After receiving the QoE measurement policy sent by the second network management node, the base station performs the QoE measurement. For example, the base station may send the QoE measurement policy to the UE. The UE performs the QoE measurement based on the QoE measurement policy, to obtain the QoE measurement report, and sends the QoE measurement report to the base station. The base station sends the QoE measurement report to the third network management node. It should be noted that after the base station sends the QoE measurement policy to the UE, and the UE access stratum receives the QoE measurement policy, the UE access stratum stores the QoE measurement quantity based on the QoE measurement policy; or optionally, after receiving the QoE measurement policy, the UE access stratum sends the QoE measurement policy to the UE application layer, and the UE application layer sends, based on the QoE measurement policy, the QoE measurement quantity to the UE access stratum for storage.

For example, the first network management node is a MnS consumer, and may be specifically a consumer of a QMC management service; and the second network management node is a MnS producer, and may be specifically a producer of the QMC management service. For example, the third network management node is a measurement collector entity (Measurement Collector Entity, MCE), and the MCE may be located in the MnS consumer, or may be located in the MnS producer, or may exist independently. The MnS consumer may be a cross-domain management function node. The MCE is an entity to which the QoE measurement report needs to be finally sent. It should be noted that the MnS herein may be a QMC management service.

It can be learned that, in this embodiment of this application, the first network management node may send the QoE measurement policy to the base station through the second network management node, and the base station sends the QoE measurement policy to the UE, to indicate the UE to discard and/or store the QoE measurement report based on the QoE measurement policy. This can ensure the integrity of the QoE measurement report reported by the UE.

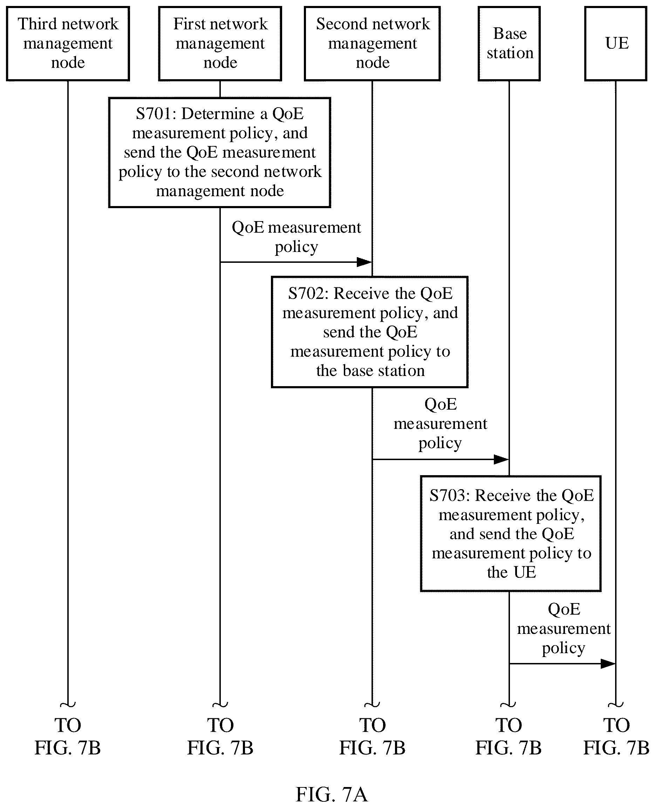

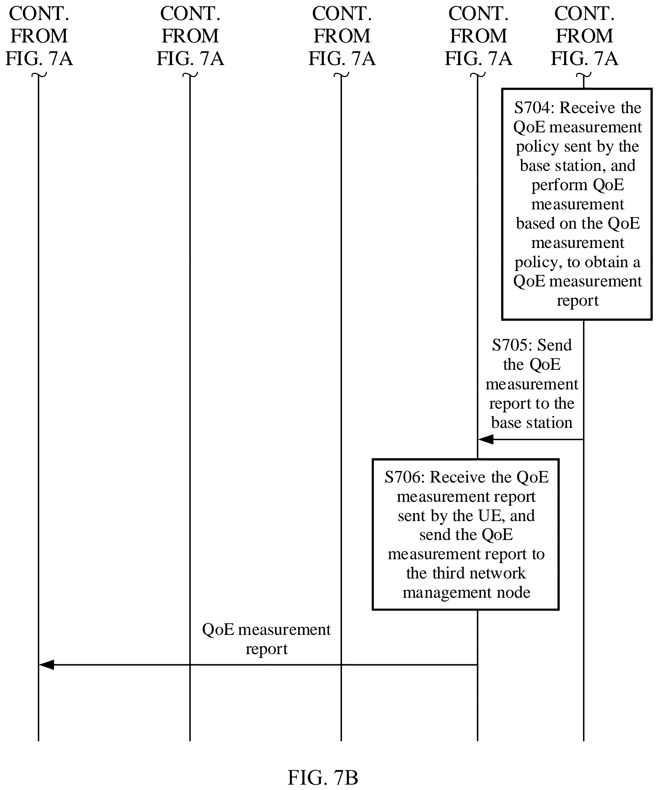

FIG. 7A and FIG. 7B are a schematic flowchart of another measurement data management method according to an embodiment of this application. As shown in FIG. 7A and FIG. 7B, the method may include the following steps.

S701: A first network management node determines a QoE measurement policy, and sends the QoE measurement policy to a second network management node.

S702: The second network management node receives the QoE measurement policy, and sends the QoE measurement policy to a base station.

In this embodiment of this application, for a signaling-based QMC management solution, the first network management node may send the QoE measurement policy to the base station through a unified data management (Unified data Management, UDM) entity and an access and mobility management function (Access and mobility management function, AMF) entity. For example, the first network management node may send the QoE measurement policy to the second network management node, and the second network management node sends the QoE measurement policy to the base station through the UDM entity and the AMF entity; the first network management node sends the QoE measurement policy to the second network management node through the UDM entity and the AMF entity, and the second network management node sends the QoE measurement policy to the base station; or the first network management node may directly send the QoE measurement policy to the base station through the UDM entity and the AMF entity. This is not limited herein.

S703: The base station receives the QoE measurement policy, and sends the QoE measurement policy to UE.

S704: The UE receives the QoE measurement policy sent by the base station, and performs QoE measurement based on the QoE measurement policy, to obtain a QoE measurement report.

In this embodiment of this application, the UE receives the QoE measurement policy, that is, a UE access stratum receives the QoE measurement policy, and the UE access stratum stores a QoE measurement quantity based on the QoE measurement policy; or optionally, after receiving the QoE measurement policy, the UE access stratum sends the QoE measurement policy to a UE application layer, and the UE application layer sends, based on the QoE measurement policy, the QoE measurement quantity corresponding to the QoE measurement policy to the UE access stratum for storage.

S705: The UE sends the QoE measurement report to the base station.

S706: The base station receives the QoE measurement report sent by the UE, and sends the QoE measurement report to a third network management node.

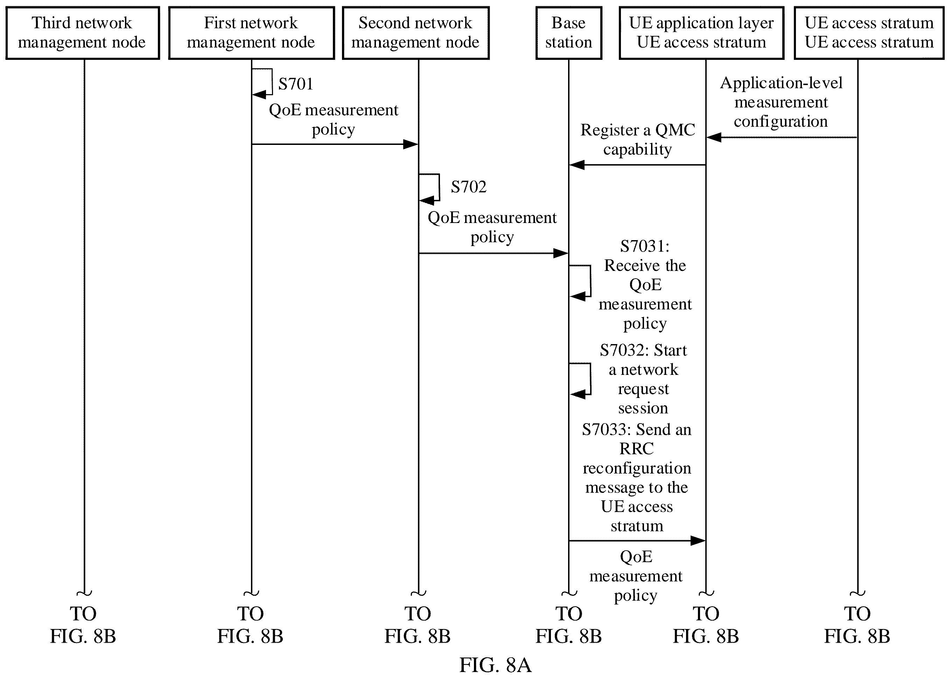

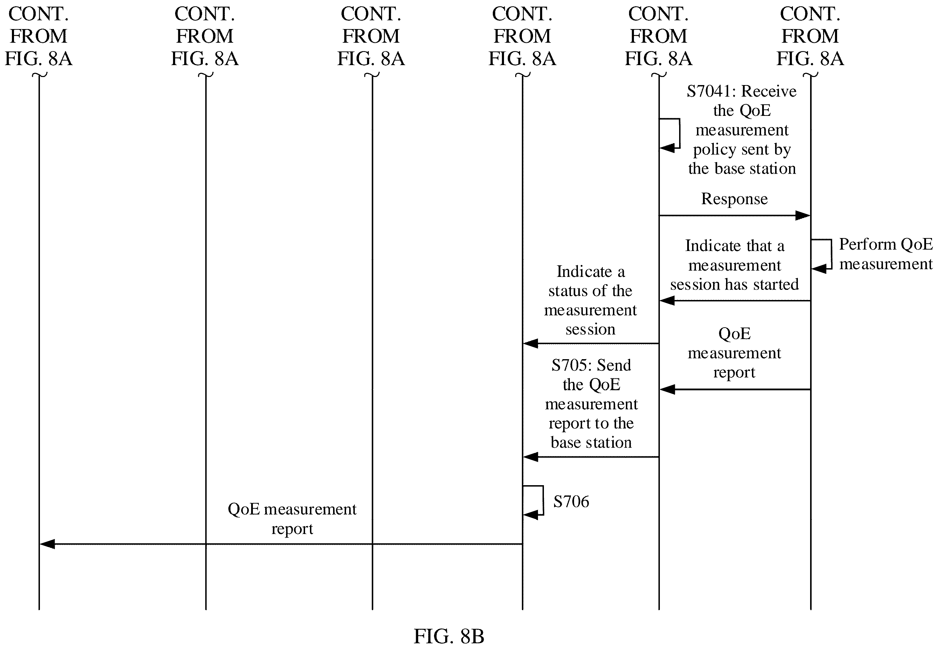

In this embodiment of this application, as shown in FIG. 8A and FIG. 8B, before step S703, there are still some interactions between the access stratum and the application layer of the UE and the base station.
(1) The UE application layer (UE application) sends an AT command to the UE AS (UE access stratum), to perform application-level measurement configuration. For details, refer to definitions in TS 28.405. Details are not described herein. There is no time sequence between this step and step S701.
(2) The UE access stratum registers a QMC capability with the base station. There is no time sequence between this step and step S701. The base station may check whether a UE capability matches a serviceType condition in QoE measurement configuration information. If the UE capability matches the serviceType condition, it may be determined that the UE has a QoE measurement capability.

In this case, step S703 may include the following steps.

S7031: The base station receives the QoE measurement policy.

S7032: The base station starts a network request session.

In this case, it may be considered that the UE already has the QoE measurement capability. It should be noted that, if the UE has the required QoE measurement capability, and the base station stores an associated QoE measurement collection entity address (qoECollectionEntityAddress), in step S706, the base station sends the QoE measurement report to the third network management node (that is, an MCE) associated with the QoE measurement collection entity address (qoECCollectionEntityAddress).

S7033: The base station sends an RRC reconfiguration message to the UE access stratum, to send the QoE measurement policy to the UE access stratum via the RRC reconfiguration message.

In this implementation, the base station may send the QoE measurement policy to the UE via the RRC reconfiguration message, for the UE to perform the QoE measurement based on the QoE measurement policy, to obtain the QoE measurement report with good integrity.

In this case, step S704 may include the following step.

S7041: The UE access stratum receives the QoE measurement policy sent by the base station.

For example, still as shown in FIG. 8A and FIG. 8B, the UE access stratum may send an active response to the UE application, where the active response is used to respond to the AT command. For example, the active response may further include an indication indicating the UE application to start the QoE measurement.

After receiving the response, the UE application performs the QoE measurement. After starting the QoE measurement, the UE application indicates, to the UE access stratum, that a measurement session has started, and the UE access stratum sends an application layer message for the QoE measurement to the base station. The message includes an identifier of the measurement application layer and a status of the session (for example, the session has started), to indicate that the session has started. For example, the UE Application sends the status of the session, the identifier of the measurement application layer, and QoE measurement data to the UE access stratum. Specifically, after performing the QoE measurement based on the QoE measurement policy, the UE application sends QoE measurement data of a specified QoE measurement type to the UE access stratum, and the UE access stratum buffers the QoE measurement data. Optionally, after receiving the QoE measurement data sent by the UE application based on the QoE measurement policy, the UE access stratum buffers the QoE measurement data based on a buffer policy of the specified QoE measurement type, to obtain the QoE measurement report. In this case, step S705 may be that the UE access stratum sends the QoE measurement report to the base station.

For example, the UE stores the QoE measurement report in a buffer at the UE access stratum based on the QoE measurement policy sent by the base station. When the QoE measurement policy sent by the base station to the UE access stratum includes the foregoing policy 4, and the buffer at the UE access stratum is full, the active response message sent by the UE access stratum to the UE Application includes information indicating the UE Application to continue to store a newly added QoE measurement report.

In this implementation, when the QoE measurement policy indicates the UE to store the newly added QoE measurement report at the UE Application when the buffer is full, the UE access stratum may indicate, via an active response message when the buffer is full, the UE Application to continue to store the newly added QoE measurement report, to avoid the newly added QoE measurement report being discarded, so as to ensure the integrity of the QoE measurement report.

For example, the UE stores the QoE measurement report in a buffer at the UE access stratum based on the QoE measurement policy sent by the base station. When the QoE measurement policy sent by the base station to the UE access stratum includes the foregoing policy 6, the UE access stratum stores the QoE measurement data based on the QoE measurement policy; or optionally, after receiving the QoE measurement policy, the UE access stratum indicates the UE Application to send the QoE measurement data to the UE access stratum via the active response message based on the policy, that is, the UE access stratum sends the QoE measurement policy to the UE Application, and the UE Application sends the QoE measurement data to the UE access stratum based on the QoE measurement policy for storage.

For example, after receiving the QoE measurement report sent by the UE, the base station may further analyze the QoE measurement report, to obtain a status of the QoE measurement report, and the base station may further send the status of the QoE measurement report to the third network management node.

The status of the QoE measurement report includes integrity state and a discarding state. The integrity state may indicate whether a QoE measurement report of a session session is complete or incomplete. For example, for a session 1, if the buffer has an entire QoE measurement result of the session 1, the QoE measurement report is the most complete; or if the buffer has only 80% of the QoE measurement result of the session 1, the QoE measurement report is relatively complete. The discarding state may be a quantity of times of discarding QoE measurement data of a session, duration of discarding the data, or the like. The integrity state and the discarding state may indicate the integrity of the QoE measurement report, so that availability of the QoE measurement report for a network management system can be ensured. For example, if a QoE measurement report of a service has low integrity, availability of the service for the network management system is low accordingly.

In this implementation, the base station may perform an analysis operation on the status of the QoE measurement report, and the QoE measurement report and the status of the QoE measurement report can be sent to the third network management node.

For example, when the third network management node exists independently, the third network management node may send the QoE measurement report or the status of the QoE measurement report to the first network management node or the second network management node. The status of the QoE measurement report may be obtained by the base station by analyzing the QoE measurement report, or may be obtained by the third network management node by analyzing the QoE measurement report after receiving the QoE measurement report sent by the base station, or may be obtained by the first network management node or the second network management node by analyzing the QoE measurement report. This is not limited herein.

In this implementation, when the third network management node exists independently, the first network management node may receive the QoE measurement report and the status of the QoE measurement report that are sent by the third network management node, so that related analysis or optimization may be performed based on the QoE measurement report and the status of the QoE measurement report.

It can be learned that, in this embodiment of this application, a problem of discarding the QoE measurement in a management-based QMC activation procedure and a signaling-based QMC activation procedure can be resolved, and the QoE measurement policy is indicated by the network management system, to obtain a more complete and more effective QoE measurement report.

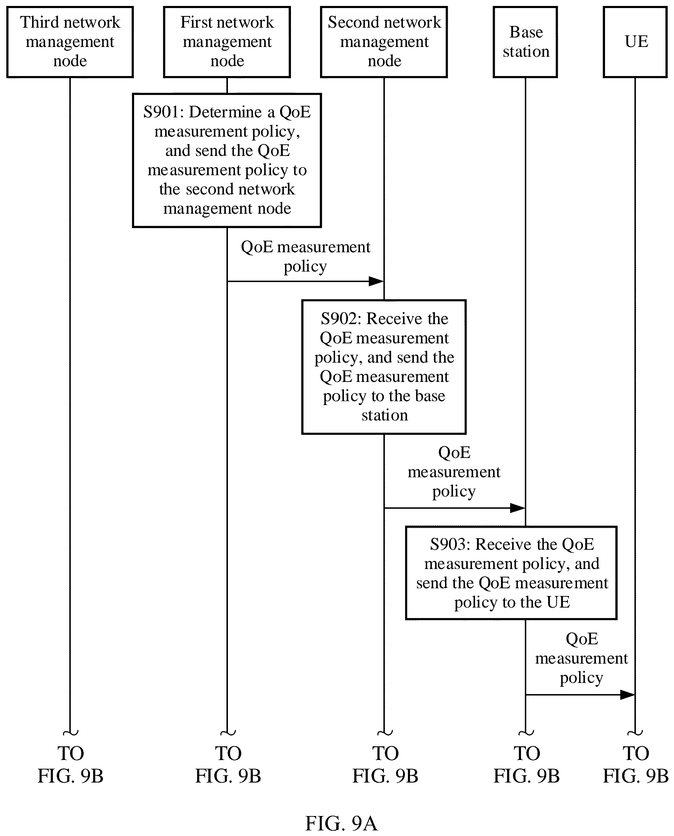

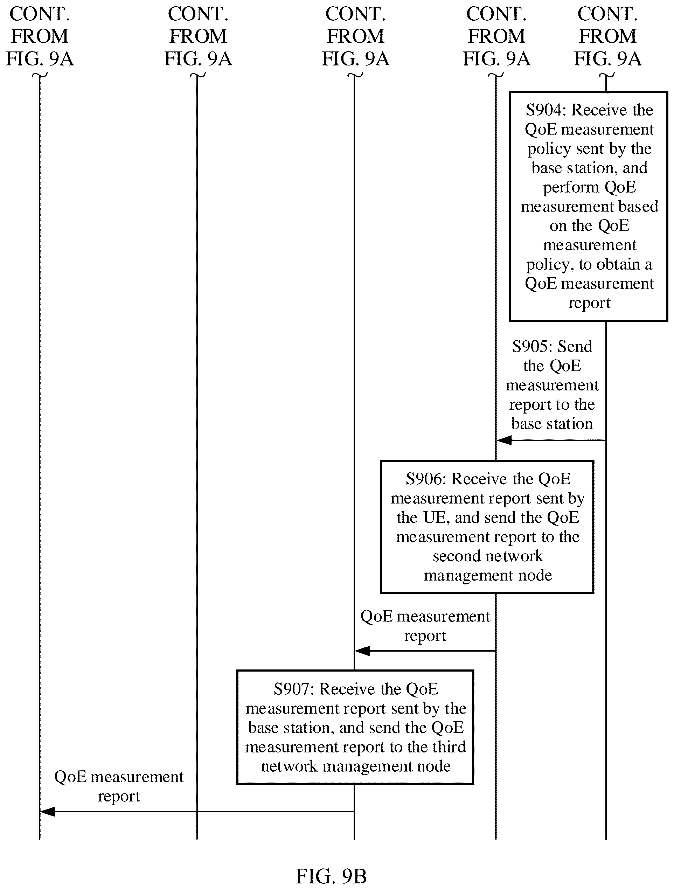

FIG. 9A and FIG. 9B are a schematic flowchart of another measurement data management method according to an embodiment of this application. As shown in FIG. 9A and FIG. 9B, the method may include the following steps.

S901: A first network management node determines a QoE measurement policy, and sends the QoE measurement policy to a second network management node.

S902: The second network management node receives the QoE measurement policy, and sends the QoE measurement policy to a base station.

S903: The base station receives the QoE measurement policy, and sends the QoE measurement policy to UE.

S904: The UE receives the QoE measurement policy sent by the base station, and performs QoE measurement based on the QoE measurement policy, to obtain a QoE measurement report.

S905: The UE sends the QoE measurement report to the base station.

S906: The base station receives the QoE measurement report sent by the UE, and sends the QoE measurement report to the second network management node.

S907: The second network management node receives the QoE measurement report sent by the base station, and sends the QoE measurement report to a third network management node.

For example, after receiving the QoE measurement policy, the base station may further analyze the QoE measurement report, to obtain a status of the QoE measurement report. The base station may further send the status of the QoE measurement report to the second network management node, and the second network management node may send, to the third network management node, the QoE measurement report and the status of the QoE measurement report that are sent by the base station.

For example, after receiving the QoE measurement report sent by the base station, the second network management node may further analyze the status of the QoE measurement report, and then send the QoE measurement report and the status of the QoE measurement report to the third network management node.

In this implementation, the base station may send the QoE measurement report and the status of the QoE measurement report to the third network management node through the second network management node, or the base station may further send the QoE measurement report to the second network management node, and the second network management node performs an analysis operation on the status of the QoE measurement report, and sends the QoE measurement report and the status of the QoE measurement report to the third network management node, to ensure integrity of the QoE measurement report and availability of the QoE measurement report for the third network management node.

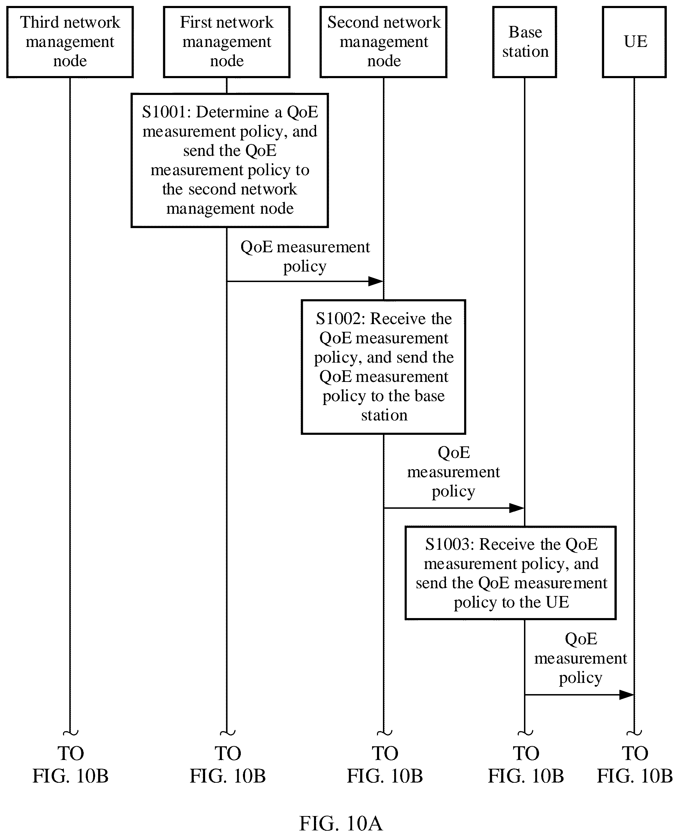

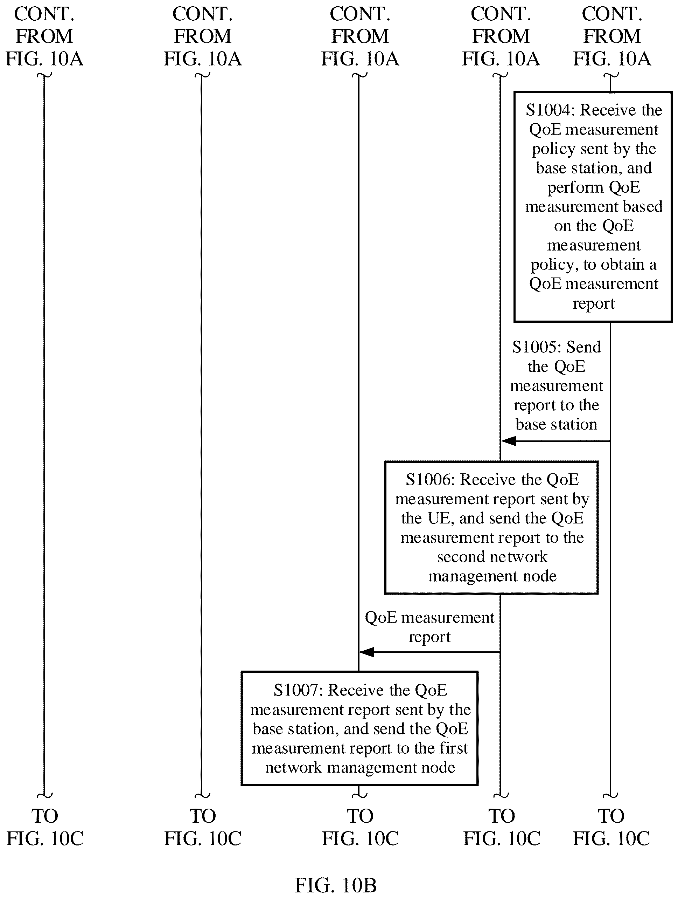

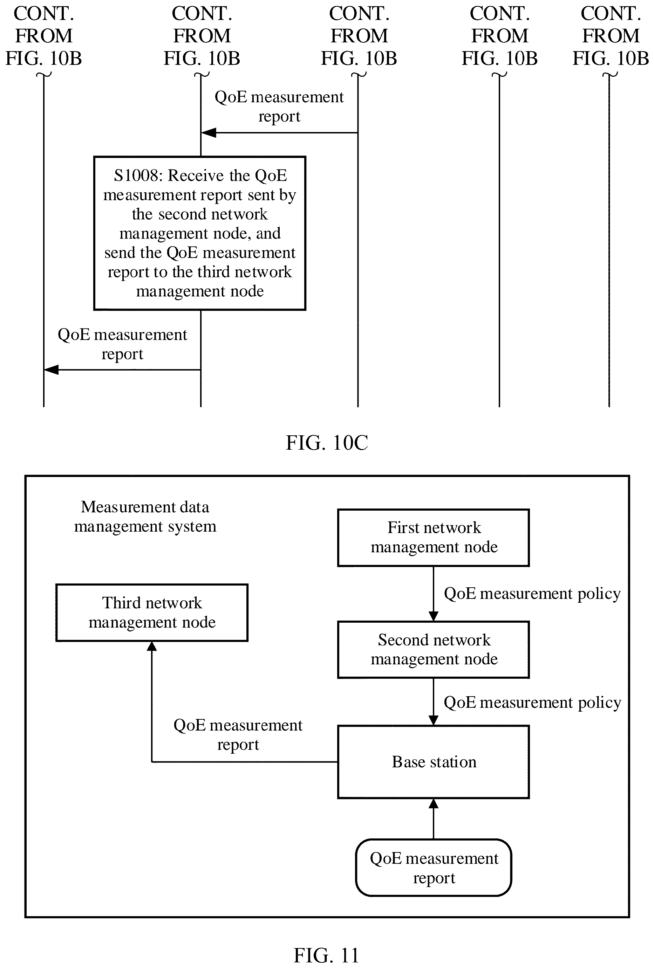

FIG. 10A to FIG. 10C are a schematic flowchart of another measurement data management method according to an embodiment of this application. As shown in FIG. 10A to FIG. 10C, the method may include the following steps.

S1001: A first network management node determines a QoE measurement policy, and sends the QoE measurement policy to a second network management node.

S1002: The second network management node receives the QoE measurement policy, and sends the QoE measurement policy to a base station.

S1003: The base station receives the QoE measurement policy, and sends the QoE measurement policy to UE.

S1004: The UE receives the QoE measurement policy sent by the base station, and performs QoE measurement based on the QoE measurement policy, to obtain a QoE measurement report.

S1005: The UE sends the QoE measurement report to the base station.

S1006: The base station receives the QoE measurement report sent by the UE, and sends the QoE measurement report to the second network management node.

S1007: The second network management node receives the QoE measurement report sent by the base station, and sends the QoE measurement report to the first network management node.

S1008: The first network management node receives the QoE measurement report sent by the second network management node, and sends the QoE measurement report to a third network management node.

In this embodiment of this application, when the third network management node is located in the first network management node, the first network management node may receive the QoE measurement report and a status of the QoE measurement report that are sent by the second network management node, so that the first network management node can perform related analysis or optimization based on the QoE measurement report and the status of the QoE measurement report; or the first network management node may further send the QoE measurement report and the status of the QoE measurement report to the third network management node, and the third network management node performs related analysis or optimization based on the QoE measurement report and the status of the QoE measurement report, to optimize a network parameter and improve service experience of users. The status of the QoE measurement report may be obtained by the second network management node by analyzing the QoE measurement report, or may be obtained by the base station by analyzing the QoE measurement report. This is not limited herein.

The foregoing describes the method in embodiments of this application, and the following provides a system in embodiments of this application.

FIG. 11 is a diagram of a measurement data management system according to an embodiment of this application. As shown in FIG. 11, the system includes a first network management node, a second network management node, and a base station.

The first network management node is configured to: determine a quality of experience QoE measurement policy, and send the QoE measurement policy to the second network management node.

The second network management node is configured to: receive the QoE measurement policy, and send the QoE measurement policy to the base station.

The base station is configured to: receive the QoE measurement policy, perform QoE measurement based on the QoE measurement policy, to obtain a QoE measurement report, and send the QoE measurement report to a third network management node.

In this embodiment of this application, the QoE measurement policy may be included in a QMC task of a create QMC (create MOI) operation. serviceType related to a QoE measurement task may include a DASH, an MTSI, VR, 5GMS, an MMTEL, an MBMS, and the like. The QoE measurement report includes a measurement report of the serviceType, and a parameter indicator of the QoE measurement report may include QoE indicators of a base station-aware service, QoE indicators of the MMTEL, QoE indicators of the DASH, QoE indicators of the MBMS, QoE indicators of the 5GMS, QoE indicators of the VR, and the like.

The QoE measurement policy may include one or more of the following policies.

Policy 1: The policy indicates UE to discard the QoE measurement report in a preset discarding manner when a buffer at an AS is full. The preset discarding manner is implemented by a user.

Policy 2: The policy indicates, when the buffer at the AS is full, the UE to discard a newly added QoE measurement report or discard a QoE measurement report stored in the buffer. The policy 2 may be understood as discarding the new QoE measurement report and retaining the old QoE measurement report; or discarding the old QoE measurement report and storing the new QoE measurement report.

Policy 3: The policy indicates the UE to establish an RRC connection to the base station when the buffer is full, to report, to the base station over the RRC connection, the QoE measurement report stored in the buffer.

Policy 4: The policy indicates the UE to store the newly added QoE measurement report at a UE application layer when the buffer is full.

Policy 5: The policy indicates the UE to store the QoE measurement report based on integrity of QoE measurement.

Policy 6: The policy indicates the UE to store, in the buffer, a QoE measurement report of a specified QoE measurement type, or store, in the buffer based on a percentage corresponding to a first QoE measurement type, a QoE measurement report of the first QoE measurement type.

In this implementation, when the buffer at the access stratum is full, the QoE measurement policy may indicate, to the UE, QoE measurement data that needs to be stored or QoE measurement data that needs to be discarded, and/or indicate the UE to report the QoE measurement report, and/or indicate the UE to store the newly added QoE measurement report at the UE application layer, and/or indicate the UE to store QoE measurement data of specific QoE measurement types in the buffer at the access stratum (or further indicate a percentage of QoE measurement data of each type), and/or indicate the UE to store the QoE measurement report based on integrity of the QoE measurement report, and/or the like. In this way, the integrity of the QoE measurement report of the UE can be ensured based on a specific discarding/storage policy.

For example, the first network management node is a MnS consumer, the second network management node is a MnS producer, and the third network management node is an MCE. The MCE may be located in the MnS consumer, or may be located in the MnS producer, or may exist independently.

It can be learned that, in this embodiment of this application, the first network management node may send the QoE measurement policy to the base station through the second network management node, and the base station sends the QoE measurement policy to the UE, to indicate the UE to discard and/or store the QoE measurement report based on the QoE measurement policy. This can ensure the integrity of the QoE measurement report reported by the UE.

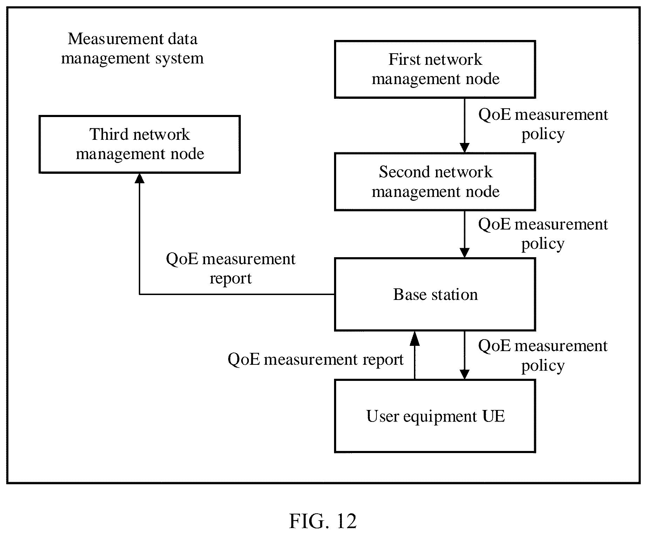

For example, as shown in FIG. 12, the system further includes the UE, and the base station is specifically configured to:
send the QoE measurement policy to the UE, where the QoE measurement policy is used by the UE to perform the QoE measurement; and
receive the QoE measurement report sent by the UE.

For example, before sending the QoE measurement policy to the UE, the UE application sends an AT command to the UE access stratum, to perform application-level measurement configuration. The UE access stratum registers a QMC capability with the base station. The base station may check whether a UE capability matches a service Type condition in QoE measurement configuration information. If the UE capability matches the service Type condition, it may be determined that the UE has a QoE measurement capability, and an associated QoE measurement collection entity address (qoECollectionEntityAddress) are stored. The base station starts a network request session, and sends the QoE measurement policy to the UE access stratum via an RRC reconfiguration message.

For example, the UE performs the QoE measurement based on the QoE measurement policy, to obtain the QoE measurement report. Specifically, the UE access stratum may send an active response to the UE application, where the active response is used to respond to the AT command. For example, the active response may further include an indication indicating the UE application to start the QoE measurement. After receiving the response, the UE application performs the QoE measurement. After starting the QoE measurement, the UE application indicates, to the UE access stratum, that the measurement session has started, and the UE access stratum sends an application layer message of the QoE measurement to the base station. After the QoE measurement starts, the UE Application collects the QoE measurement report. When the QoE measurement report is available, the UE Application sends the QoE measurement report to the UE access stratum, and the UE access stratum manages, based on the QoE measurement policy, the QoE measurement report sent by the UE Application, to obtain the reportable QoE measurement report, and sends the QoE measurement report to the base station.

In this implementation, the base station may send the QoE measurement policy to the UE via an RRC reconfiguration message, for the UE to perform the QoE measurement based on the QoE measurement policy, to obtain the QoE measurement report with good integrity.

For example, the UE is further configured to:
when the buffer is full, send an active response message to the UE Application through the UE access stratum, where the active response message includes information indicating the UE Application to store the newly added QoE measurement report.

In this embodiment of this application, when the QoE measurement policy indicates the UE to store the newly added QoE measurement report at the UE Application when the buffer is full, the UE access stratum may indicate, via the active response message when the buffer is full, the UE Application to continue to store the newly added QoE measurement report.

For example, after receiving the QoE measurement report sent by the UE, the base station is further configured to:
analyze the QoE measurement report, to obtain a status of the QoE measurement report; and
send the status of the QoE measurement report to the third network management node.

In this embodiment of this application, the status of the QoE measurement report includes integrity state and a discarding state. The base station may perform an analysis operation on the status of the QoE measurement report, to obtain the status of the QoE measurement report, so that the QoE measurement report and the status of the QoE measurement report can be sent to the third network management node. The integrity state and the discarding state may indicate the integrity of the QoE measurement report, so that availability of the QoE measurement report for a network management system can be ensured.

For example, the base station is specifically configured to:
send the QoE measurement report to the third network management node through the second network management node.

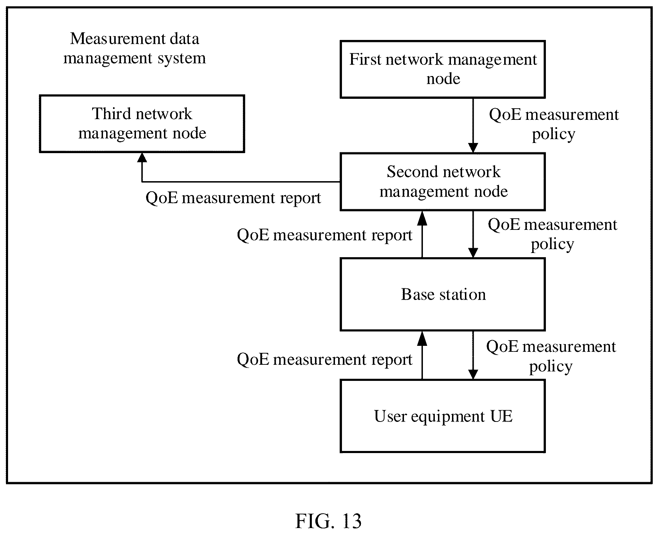

In this embodiment of this application, as shown in FIG. 13, the base station may directly send the QoE measurement report and the status of the QoE measurement report to the third network management node, or may send the QoE measurement report and the status of the QoE measurement report to the third network management node through the second network management node.

For example, the base station is specifically configured to:
send the QoE measurement report to the first network management node through the second network management node, for the first network management node to send the QoE measurement report to the third network management node.

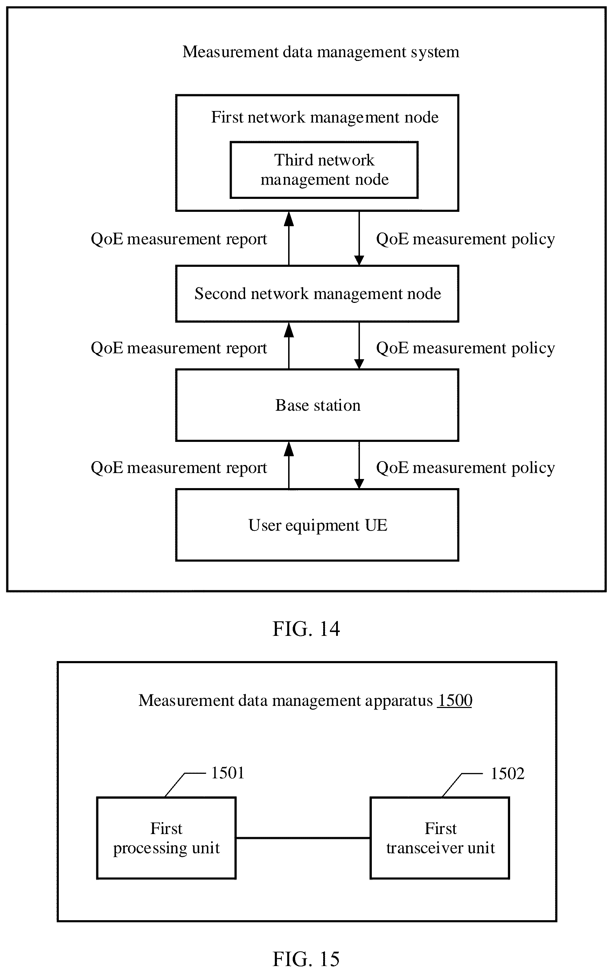

In this embodiment of this application, as shown in FIG. 14, when the third network management node is located in the first network management node, the base station may send the QoE measurement report to the first network management node through the second network management node, to ensure the integrity of the QoE measurement report and availability of the QoE measurement report for the third network management node.

For example, the first network management node is further configured to:
receive the QoE measurement report of the UE and the status of the QoE measurement report.

In this embodiment of this application, when the third network management node is located in the first network management node, the first network management node may receive the QoE measurement report and the status of the QoE measurement report that are sent by the second network management node. In addition, the QoE measurement report and the status of the QoE measurement report may be further sent to the third network management node. When the third network management node exists independently, the first network management node may receive the QoE measurement report and the status of the QoE measurement report that are sent by the third network management node.

For example, the second network management node is further configured to:
receive the QoE measurement report sent by the base station;
analyze the QoE measurement report, to obtain the status of the QoE measurement report; and
send the QoE measurement report and the status of the QoE measurement report to the third network management node.

In this embodiment of this application, when the base station sends the QoE measurement report to the third network management node through the second network management node, the second network management node may analyze the status of the QoE measurement report, and send the QoE measurement report and the status of the QoE measurement report to the third network management node.

The foregoing describes the method and the system in embodiments of this application, and the following provides an apparatus in embodiments of this application.

FIG. 15 is a diagram of a structure of a measurement data management apparatus 1500 according to an embodiment of this application. The measurement data management apparatus 1500 is used for a first network management node. As shown in FIG. 15, the measurement data management apparatus 1500 includes a first processing unit 1501 and a first transceiver unit 1502. The units are described in detail below.

The first processing unit 1501 is configured to determine a QoE measurement policy; and
the first transceiver unit 1502 is configured to send the QoE measurement policy to a second network management node, where
the QoE measurement policy is used by a base station under the second network management node to perform a QoE measurement task.

In a possible implementation, the QoE measurement policy may include one or more of the following:
The QoE measurement policy indicates UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In a possible implementation, the first transceiver unit 1502 is further configured to:
receive a QoE measurement report of the UE and a status of the QoE measurement report.

In a possible implementation, the status of the QoE measurement report includes integrity state and a discarding state.

In a possible implementation, the first network management node is a management service consumer, and the second network management node is a management service producer.

It should be noted that, for implementations of the units, refer to the corresponding descriptions of the method embodiments shown in FIG. 6 to FIG. 10C. Certainly, the measurement data management apparatus 1500 provided in this embodiment of this application includes but is not limited to the units and modules. For example, the measurement data management apparatus 1500 may further include a storage unit, and the storage unit may be configured to store program code and data of the measurement data management apparatus 1500.

It can be learned that, in the measurement data management apparatus 1500 shown in FIG. 15, the first network management node may send the QoE measurement policy to the base station through the second network management node, and the base station sends the QoE measurement policy to the UE, to indicate the UE to discard and/or store the QoE measurement report based on the QoE measurement policy. This can ensure the integrity of the QoE measurement report reported by the UE.

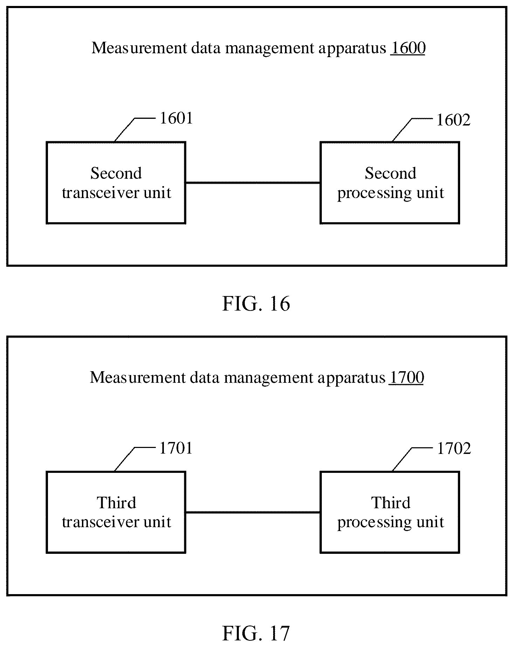

FIG. 16 is a diagram of a structure of a measurement data management apparatus 1600 according to an embodiment of this application. The measurement data management apparatus 1600 is used for a base station. As shown in FIG. 16, the measurement data management apparatus 1600 includes a second transceiver unit 1601 and a second processing unit 1602. The units are described in detail below.

The second transceiver unit 1601 is configured to: receive a QoE measurement policy from a first network management node; send the QoE measurement policy to UE, where the QoE measurement policy is used for the UE to perform QoE measurement; receive a QoE measurement report sent by the UE; and send the QoE measurement report to a third network management node.

In a possible implementation, the QoE measurement policy may include one or more of the following:
The QoE measurement policy indicates the UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of the QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In a possible implementation, after receiving the QoE measurement report sent by the UE, the second processing unit 1602 is configured to:
analyze the QoE measurement report, to obtain a status of the QoE measurement report; and
the second transceiver unit 1601 is further configured to:
   send the status of the QoE measurement report to the third network management node.

In a possible implementation, the status of the QoE measurement report includes integrity state and a discarding state.

In a possible implementation, in the aspect of sending the QoE measurement report to the third network management node, the second transceiver unit 1601 is specifically configured to:
send the QoE measurement report to the first network management node through a second network management node, for the first network management node to send the QoE measurement report to the third network management node.

In a possible implementation, in the aspect of sending the QoE measurement policy to the UE, the second transceiver unit 1601 is specifically configured to:
send a radio resource control RRC reconfiguration message to the UE, and send the QoE measurement policy to the UE via the RRC reconfiguration message.

It should be noted that, for implementations of the units, refer to the corresponding descriptions of the method embodiments shown in FIG. 6 to FIG. 10C. Certainly, the measurement data management apparatus 1600 provided in this embodiment of this application includes but is not limited to the units and modules. For example, the measurement data management apparatus 1600 may further include a storage unit, and the storage unit may be configured to store program code and data of the measurement data management apparatus 1600.

It can be learned that, in the measurement data management apparatus 1600 shown in FIG. 16, the base station may receive the QoE measurement policy sent by the first network management node, and send the QoE measurement policy to the UE, to indicate the UE to discard and/or store the QoE measurement report based on the QoE measurement policy. This can ensure the integrity of the QoE measurement report reported by the UE.

FIG. 17 is a diagram of a structure of a measurement data management apparatus 1700 according to an embodiment of this application. The measurement data management apparatus 1700 is used for UE. As shown in FIG. 17, the measurement data management apparatus 1700 includes a third transceiver unit 1701 and a third processing unit 1702. The units are described in detail below.

The third transceiver unit 1701 is configured to receive a QoE measurement policy sent by a base station;
the third processing unit 1702 is configured to perform QoE measurement based on the QoE measurement policy, to obtain a QoE measurement report; and
the third transceiver unit 1701 is further configured to send the QoE measurement report to the base station.

In a possible implementation, the QoE measurement policy may include one or more of the following:
The QoE measurement policy indicates the UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of the QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

In a possible implementation, in the aspect of performing the QoE measurement based on the QoE measurement policy to obtain the QoE measurement report, the third processing unit 1702 is specifically configured to:
perform the QoE measurement based on the QoE measurement policy, and store the QoE measurement report in the buffer; and
the third processing unit 1702 is further configured to:
   when the buffer is full, send an active response message to the application layer through the access stratum, where the active response message includes information indicating the application layer to store the newly added QoE measurement report.

It should be noted that, for implementations of the units, refer to the corresponding descriptions of the method embodiments shown in FIG. 6 to FIG. 10C. Certainly, the measurement data management apparatus 1700 provided in this embodiment of this application includes but is not limited to the units and modules. For example, the measurement data management apparatus 1700 may further include a storage unit, and the storage unit may be configured to store program code and data of the measurement data management apparatus 1700.

It can be learned that, in the measurement data management apparatus 1700 shown in FIG. 17, the UE may discard and/or store the QoE measurement report based on the QoE measurement policy sent by the base station. This can ensure the integrity of the reported QoE measurement report.

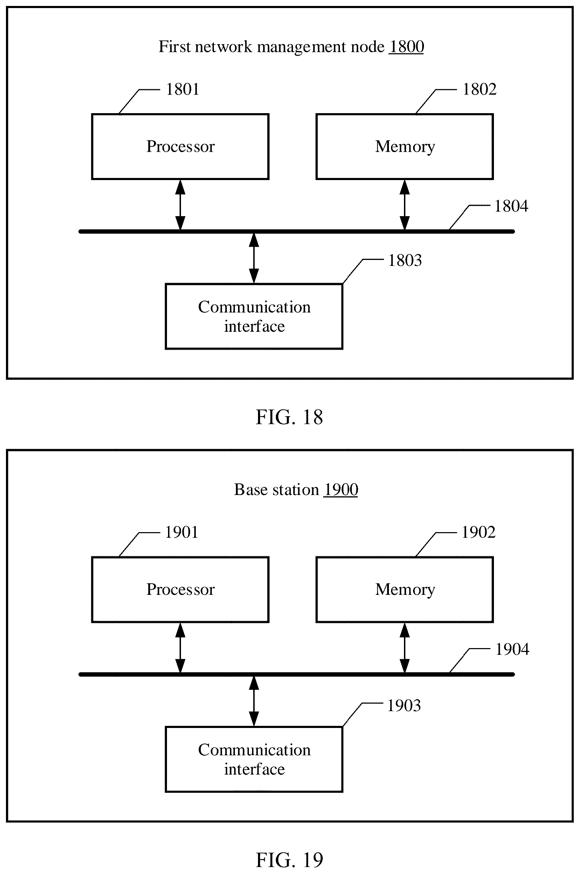

FIG. 18 is a diagram of a structure of a first network management node 1800 according to an embodiment of this application. The first network management node 1800 includes a processor 1801, a memory 1802, and a communication interface 1803. The processor 1801, the memory 1802, and the communication interface 1803 are connected to each other through a bus 1804.

The memory 1802 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1802 is configured to store a related computer program and data. The communication interface 1803 is configured to receive and send data.

The processor 1801 may be one or more central processing units (central processing units, CPUs). When the processor 1801 is one CPU, the CPU may be a single-core CPU or a multi-core CPU.

The processor 1801 in the first network management node 1800 is configured to read the computer program code stored in the memory 1802, to perform the following operations:
determining a quality of experience QoE measurement policy; and
sending the QoE measurement policy to a second network management node, where
the QoE measurement policy is used by a base station under the second network management node to perform a QoE measurement task.

It should be noted that, for implementations of the operations, refer to the corresponding descriptions of the method embodiments shown in FIG. 6 to FIG. 10C.

It can be learned that, in the first network management node 1800 shown in FIG. 18, the first network management node 1800 may send the QoE measurement policy to the base station through the second network management node, and the base station sends the QoE measurement policy to the UE, to indicate the UE to discard and/or store the QoE measurement report based on the QoE measurement policy. This can ensure the integrity of the QoE measurement report reported by the UE.

FIG. 19 is a diagram of a structure of a base station 1900 according to an embodiment of this application. The base station 1900 includes a processor 1901, a memory 1902, and a communication interface 1903. The processor 1901, the memory 1902, and the communication interface 1903 are connected to each other through a bus 1904.

The memory 1902 includes but is not limited to a RAM, a ROM, an EPROM, and a CD-ROM. The memory 1902 is configured to store a related computer program and data. The communication interface 1903 is configured to receive and send data.

The processor 1901 may be one or more CPUs. When the processor 1901 is one CPU, the CPU may be a single-core CPU, or may be a multi-core CPU.

The processor 1901 in the base station 1900 is configured to read the computer program code stored in the memory 1902, to perform the following operations:
receiving a QoE measurement policy from a first network management node;
sending the QoE measurement policy to UE, where the QoE measurement policy is used for QoE measurement by the UE;
receiving a QoE measurement report sent by the UE; and
sending the QoE measurement report to a third network management node.

It should be noted that, for implementations of the operations, refer to the corresponding descriptions of the method embodiments shown in FIG. 6 to FIG. 10C.

It can be learned that, in the base station 1900 shown in FIG. 19, the base station 1900 may receive the QoE measurement policy sent by the first network management node, and send the QoE measurement policy to the UE, so that the UE discards and/or stores the QoE measurement report based on the QoE measurement policy, and reports the obtained QoE measurement report to the base station. In this case, the base station may send the QoE measurement report to the third network management node, and the third network management node can perform related analysis or optimization based on the QoE measurement report.

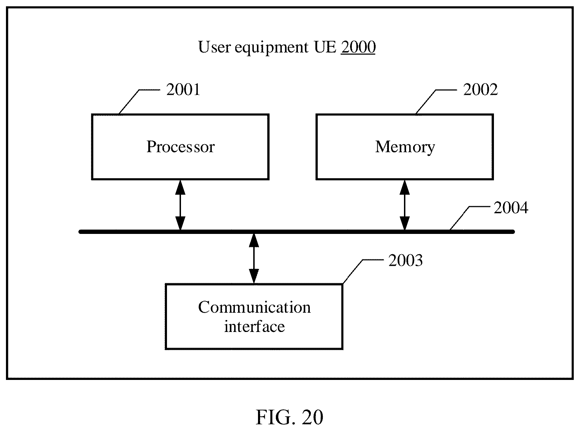

FIG. 20 is a diagram of a structure of user equipment UE 2000 according to an embodiment of this application. The user equipment UE 2000 includes a processor 2001, a memory 2002, and a communication interface 2003. The processor 2001, the memory 2002, and the communication interface 2003 are connected to each other through a bus 2004.

The memory 2002 includes but is not limited to a RAM, a ROM, an EPROM, and a CD-ROM. The memory 2002 is configured to store a related computer program and data. The communication interface 2003 is configured to receive and send data.

The processor 2001 may be one or more CPUs. When the processor 2001 is one CPU, the CPU may be a single-core CPU, or may be a multi-core CPU.

The processor 2001 in the user equipment UE 2000 is configured to read the computer program code stored in the memory 2002, to perform the following operations:
receiving a QoE measurement policy sent by a base station;
performing QoE measurement based on the QoE measurement policy, to obtain a QoE measurement report; and
sending the QoE measurement report to the base station.

It should be noted that, for implementations of the operations, refer to the corresponding descriptions of the method embodiments shown in FIG. 6 to FIG. 10C.

It can be learned that, in the user equipment UE 2000 shown in FIG. 20, the user equipment UE 2000 may discard and/or store the QoE measurement report based on the QoE measurement policy sent by the base station. This can ensure the integrity of the reported QoE measurement report.

An embodiment of this application further provides a chip, including a processor, configured to call a computer program from a memory and run the computer program, to enable a device to which the chip is mounted to perform the method in any embodiment in FIG. 6 to FIG. 10C.

An embodiment of this application further provides a computer-readable storage medium (Memory). The computer-readable storage medium stores a computer program. When the computer program is run, the method in any embodiment in FIG. 6 to FIG. 10C is implemented. It can be understood that the computer-readable storage medium herein may include a built-in storage medium in the device, and certainly may also include an extended storage medium supported by the device. The computer-readable storage medium provides storage space, and the storage space stores an operating system of the device. In addition, the storage space further stores one or more computer programs that are suitable for being loaded and executed by the processor of the device. It should be noted that the computer-readable storage medium herein may be a highspeed RAM, or may be a nonvolatile memory (nonvolatile memory), for example, at least one magnetic disk memory. Optionally, the computer-readable storage medium may be at least one computer-readable storage medium located far away from the processor.

An embodiment of this application further provides a computer program product. The computer program product includes computer program code. When the computer program code is run, the method procedure in any embodiment in FIG. 6 to FIG. 10C is implemented.

In the foregoing embodiments, the description of each embodiment has respective focuses. For a part that is not described in detail in an embodiment, refer to related descriptions in other embodiments.

It should be understood that, the processor mentioned in embodiments of this application may be a CPU or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In the several embodiments provided in this application, it should be understood that the disclosed system, apparatus and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, function units in embodiments of this application may be integrated into one processing unit, each of the units may exist independently physically, or two or more units may be integrated into one unit. When the integrated unit is implemented in the form of software function unit and sold or used as an independent product, the integrated unit may be stored in a computer-readable storage medium.

In this application, at least one means one or more, and a plurality of means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, a character "/" usually indicates an "or" relationship between associated objects.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A measurement data management method, applied to a first network management node, wherein the method comprises:
determining a quality of experience QoE measurement policy; and
sending the QoE measurement policy to a second network management node, wherein
the QoE measurement policy is used by a base station under the second network management node to perform a QoE measurement task.

2. The method according to claim 1, wherein the QoE measurement policy comprises one or more of the following:
the QoE measurement policy indicates user equipment UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

3. The method according to claim 1 or 2, wherein the method further comprises:
receiving a QoE measurement report of the UE and a status of the QoE measurement report.

4. The method according to claim 3, wherein the status of the QoE measurement report comprises an integrity state and a discarding state.

5. The method according to any one of claims 1 to 4, wherein the first network management node is a management service consumer, and the second network management node is a management service producer.

6. A measurement data management method, applied to a base station, wherein the method comprises:
receiving a quality of experience QoE measurement policy from a first network management node;
sending the QoE measurement policy to user equipment UE, wherein the QoE measurement policy is used for QoE measurement by the UE;
receiving a QoE measurement report sent by the UE; and
sending the QoE measurement report to a third network management node.

7. The method according to claim 6, wherein the QoE measurement policy comprises one or more of the following:
the QoE measurement policy indicates the user equipment UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of the QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

8. The method according to claim 6 or 7, wherein after receiving the QoE measurement report sent by the UE, the method further comprises:
analyzing the QoE measurement report, to obtain a status of the QoE measurement report; and
the method further comprises:
sending the status of the QoE measurement report to the third network management node.

9. The method according to claim 8, wherein the status of the QoE measurement report comprises an integrity state and a discarding state.

10. The method according to claim 6 or 7, wherein the sending the QoE measurement report to the third network management node comprises:
sending the QoE measurement report to the third network management node through a second network management node.

11. The method according to claim 10, wherein the sending the QoE measurement report to the third network management node through the second network management node comprises:
sending the QoE measurement report to the first network management node through the second network management node, for the first network management node to send the QoE measurement report to the third network management node.

12. The method according to any one of claims 6 to 11, wherein the sending the QoE measurement policy to the user equipment UE comprises:
sending a radio resource control RRC reconfiguration message to the UE, and sending the QoE measurement policy to the UE via the RRC reconfiguration message.

13. A measurement data management method, applied to user equipment UE, wherein the method comprises:
receiving a quality of experience QoE measurement policy sent by a base station;
performing QoE measurement based on the QoE measurement policy, to obtain a QoE measurement report; and
sending the QoE measurement report to the base station.

14. The method according to claim 13, wherein the QoE measurement policy comprises one or more of the following:
the QoE measurement policy indicates the UE to discard a newly added QoE measurement report or discard a QoE measurement report stored in the buffer, when a buffer at an access stratum is full;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of the QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

15. The method according to claim 14, wherein the performing the QoE measurement based on the QoE measurement policy, to obtain the QoE measurement report comprises:
performing the QoE measurement based on the QoE measurement policy, and storing the QoE measurement report in the buffer; and
the method further comprises:
when the buffer is full, sending an active response message to the application layer through the access stratum, wherein the active response message comprises information indicating the application layer to store the newly added QoE measurement report.

16. A measurement data management method, wherein the method comprises:
determining, by a first network management node, a quality of experience QoE measurement policy, and sending the QoE measurement policy to a second network management node;
receiving, by the second network management node, the QoE measurement policy, and sending the QoE measurement policy to a base station;
performing, by the base station, a QoE measurement task based on the QoE measurement policy, to obtain a QoE measurement report; and
sending, by the base station, the QoE measurement report to a third network management node.

17. The method according to claim 16, wherein the QoE measurement policy comprises one or more of the following:
the QoE measurement policy indicates to discard a newly added QoE measurement report or discard a QoE measurement report stored in the buffer, when a buffer at an access stratum is full, user equipment UE;
the QoE measurement policy indicates the UE to establish a radio resource control RRC connection to the base station when the buffer is full, to report, to the base station over the RRC connection, the QoE measurement report stored in the buffer;
the QoE measurement policy indicates the UE to store the newly added QoE measurement report at a UE application layer when the buffer is full;
the QoE measurement policy indicates the UE to store a QoE measurement report based on integrity of QoE measurement; and
the QoE measurement policy indicates the UE to store, in the buffer, a QoE measurement report of a specified QoE measurement type, or store, in the buffer based on a percentage corresponding to a first QoE measurement type, a QoE measurement report of the first QoE measurement type.

18. The method according to claim 17, wherein performing, by the base station, the QoE measurement task based on the QoE measurement policy, to obtain the QoE measurement report comprises:
sending the QoE measurement policy to the UE, wherein the QoE measurement policy is used by the UE to perform the QoE measurement;
receiving the QoE measurement report sent by the UE.

19. The method according to claim 17 or 18, wherein after receiving, by the base station, the QoE measurement report sent by the UE, the method further comprises:
analyzing, by the base station, the QoE measurement report, to obtain a status of the QoE measurement report; and
sending, by the base station, the status of the QoE measurement report to the third network management node.

20. The method according to claim 19, wherein the status of the QoE measurement report comprises an integrity state and a discarding state.

21. The method according to any one of claims 16 to 18, wherein sending, by the base station, the QoE measurement report to the third network management node comprises:
sending, by the base station, the QoE measurement report to the third network management node through the second network management node.

22. The method according to claim 21, wherein sending, by the base station, the QoE measurement report to the third network management node through the second network management node comprises:
sending, by the base station, the QoE measurement report to the first network management node through the second network management node, for the first network management node to send the QoE measurement report to the third network management node.

23. The method according to any one of claims 17 to 22, wherein sending, by the base station, the QoE measurement policy to the user equipment UE comprises:
sending, by the base station, a radio resource control RRC reconfiguration message to the UE, and sending the QoE measurement policy to the UE via the RRC reconfiguration message.

24. The method according to claim 18, wherein performing, by the UE, the QoE measurement based on the QoE measurement policy, to obtain the QoE measurement report comprises:
performing, by the UE, the QoE measurement based on the QoE measurement policy, and storing the QoE measurement report in the buffer; and
the method further comprises:
when the buffer is full, sending, by the UE, an active response message to the application layer through the access stratum, wherein the active response message comprises information indicating the application layer to store the newly added QoE measurement report.

25. The method according to claim 22, wherein the method further comprises:
receiving, by the first network management node, the QoE measurement report of the UE and a status of the QoE measurement report.

26. The method according to any one of claims 16 to 25, wherein the first network management node is a management service consumer, and the second network management node is a management service producer.

27. The method according to claim 21, wherein the method further comprises:
receiving, by the second network management node, the QoE measurement report sent by the base station;
analyzing, by the second network management node, the QoE measurement report, to obtain a status of the QoE measurement report; and
sending, by the second network management node, the QoE measurement report and the status of the QoE measurement report to the third network management node.

28. A measurement data management system, comprising a first network management node, a second network management node, and a base station, wherein the first network management node is configured to perform the method according to any one of claims 1 to 5, and the base station is configured to perform the method according to any one of claims 6 to 12.

29. The system according to claim 28, further comprising user equipment UE, wherein the UE is configured to perform the method according to any one of claims 13 to 15.

30. A measurement data management apparatus, used for a first network management node, wherein the apparatus comprises a first processing unit and a first transceiver unit;
the first processing unit is configured to determine a quality of experience QoE measurement policy; and
the first transceiver unit is configured to send the QoE measurement policy to a second network management node, wherein
the QoE measurement policy is used by a base station under the second network management node to perform a QoE measurement task.

31. A measurement data management apparatus, used for a base station, wherein the apparatus comprises a second transceiver unit; and
the second transceiver unit is configured to: receive a quality of experience QoE measurement policy from a first network management node; send the QoE measurement policy to user equipment UE, wherein the QoE measurement policy is used for the UE to perform QoE measurement; receive a QoE measurement report sent by the UE; and send the QoE measurement report to a third network management node.

32. A measurement data management apparatus, used for user equipment UE, wherein the apparatus comprises a third transceiver unit and a third processing unit;
the third transceiver unit is configured to receive a quality of experience QoE measurement policy sent by a base station;
the third processing unit is configured to perform QoE measurement based on the QoE measurement policy, to obtain a QoE measurement report; and
the third transceiver unit is further configured to send the QoE measurement report to the base station.

33. A first network management node, comprising a processor, a memory, a communication interface, and one or more programs, wherein the one or more programs are stored in the memory and are configured to be executed by the processor, and the program comprises instructions used to perform the method according to any one of claims 1 to 5.

34. A base station, comprising a processor, a memory, a communication interface, and one or more programs, wherein the one or more programs are stored in the memory and are configured to be executed by the processor, and the program comprises instructions used to perform the method according to any one of claims 6 to 12.

35. User equipment UE, comprising a processor, a memory, a communication interface, and one or more programs, wherein the one or more programs are stored in the memory and are configured to be executed by the processor, and the program comprises instructions used to perform the method according to any one of claims 13 to 15.

36. A chip, comprising a processor, configured to call a computer program from a memory and run the computer program, to enable a device to which the chip is mounted to perform the method according to any one of claims 1 to 5, 6 to 12, 13 to 15, or 16 to 27.

37. A computer-readable storage medium, wherein the computer-readable storage medium stores a computer program, and when the computer program is run, the method according to any one of claims 1 to 5, 6 to 12, 13 to 15, or 16 to 27 is implemented.

38. A computer program product, wherein the computer program product comprises computer program code, and when the computer program code is run, the method according to any one of claims 1 to 5, 6 to 12, 13 to 15, or 16 to 27 is implemented.
